# FASCICULE DE BREVET EUROPEEN

(11) **EP 2 001 958 B1**
(45) Date de publication et mention de la délivrance du brevet: **02.05.2018**
(21) Numéro de dépôt: 07719430.6
(22) Date de dépôt: 28.03.2007
(51) Int. Cl.: C08L 97/02, A01N 59/14, B27K 3/52, C08J 3/20, C08K 3/38, C08K 5/17, C08L 1/08, C08L 3/04, C09K 21/02

(54) **MATIERE SOLIDE A BASE DE POLYSACCHARIDES IMPREGNEE ET A STABILITE AMELIOREE PROCEDES DE PREPARATION ET SOLUTIONS D'IMPREGNATION UTILISEES**
IMPRÄGNIERTES FESTES MATERIAL AUF POLYSACCHARID-BASIS MIT VERBESSERTER STABILITÄT, HERSTELLUNGSVERFAHREN DAFÜR UND VERWENDETE IMPRÄGNIERLÖSUNGEN
POLYSACCHARIDE-BASED IMPREGNATED SOLID MATERIAL WITH IMPROVED STABILITY, METHODS FOR PREPARING SAME, AND IMPREGNATING SOLUTIONS USED

(30) Priorité: 28.03.2006 CA 2541125
(43) Date de publication de la demande: 17.12.2008
(73) Titulaire: HYDRO-QUEBEC, Montréal, Québec H2Z 1A4 (CA)
(72) Inventeur: GASTONGUAY, Louis, Varennes, Québec J3X 2J8 (CA); PERRIER, Michel, Montréal, Québec H1T 3H8 (CA); HARVEY, Paul-Etienne, Saint-Hubert, Québec J3Y 8C2 (CA); LABRECQUE, Jean-François, Montréal, Québec H2H 1Z6 (CA); ROBITAILLE, Michel, Varennes, Québec J3X 1V1 (CA); BESNER, André, Montréal, Québec H1T 3Z2 (CA)
(74) Mandataire: Goulard, Sophie
(86) Numéro de dépôt international: PCT/CA2007/000498
(87) Numéro de publication internationale: WO 2007/109898

(56) Documents cités:
- EP-A2- 0 361 892
- WO-A1-91/00327
- WO-A2-98/39146
- DE-A1- 10 340 093
- US-A- 4 076 540
- US-A- 4 461 721
- US-A- 4 755 298
- US-A1- 2005 013 939
- US-B2- 6 723 352
- US-B2- 6 844 081
- BIZAK ET AL.: 'Crosslinked polymer gels for boron extraction derived from N-glucidol-N-methyl-2-hydroxypropyl methacrylate' MACROMOL. CHEM. PHYS. vol. 201, 2000, pages 577 - 584, XP008129433
- YOSHIMURA ET AL.: 'Complexation of boric acid with the N-methyl-D-glucamine group in solution and in crosslinking polymer' J. CHEM. SOC., FARADAY TRANS. vol. 94, no. 5, 1998, pages 683 - 689, XP000738284
- LEVAN S.L.: 'Chemistry of Fire Retardancy', 1984 article 'Advanced in Chemical Series', pages 563 - 564

## Description

### DOMAINE DE L'INVENTION

L'invention porte sur une matière solide à base de polysaccharides comprenant, dans sa masse, au moins un agent actif ayant des propriétés bactéricides et/ou fongiques et/ou insecticides et/ou comme retardateur de combustion, et au moins un agent complexant et au moins une matrice polymérique comprenant un agent complexant.

L'agent actif choisi est principalement constitué d'un ou de plusieurs composés respectueux de l'environnement.

L'agent complexant choisi a pour propriété de pouvoir complexer des composés bactéricides et/ou fongiques et/ou insecticides et/ou retardateurs de combustion présents dans la matière solide. La matière solide de l'invention se caractérise par une stabilité améliorée et par un impact environnemental réduit.

L'invention porte aussi sur les procédés mis en oeuvre pour réaliser l'imprégnation de la matière solide à base de polysaccharides.

L'invention permet notamment de préparer des matériaux à base de particules de bois et des bois présentant une résistance particulière, notamment face aux agressions environnementales auxquelles ces matériaux sont exposés lors d'une utilisation en plein air, et plus particulièrement lors d'une utilisation dans des atmosphères à forte teneur en humidité, caractéristiques notamment des climats subtropicaux et tropicaux.

Les objets préparés en utilisant, comme matériau constitutif, au moins une des matières solides de l'invention, à base de polysaccharides, présentent un impact minimum sur l'environnement, en évitant d'y libérer des composés chimiques à haute toxicité.

### ÉTAT DE L'ART

La dégradation microbiologique de la ligno-cellulose est l'un des phénomènes les plus importants de la nature. L'activité fongique est nécessaire pour permettre une réutilisation efficace de la bio-masse, mais elle limite considérablement l'utilisation du bois en altérant sa densité et sa force mécanique. Des méthodes ont été mises au point dans le passé dans le but de prévenir, voir même d'éradiquer les champignons lignivores.

Cependant ces méthodes conventionnelles d'imprégnation du bois sont basées sur l'utilisation de quantités non négligeables d'agents toxiques comme de la créosote, des phénols chlorés ou des sels inorganiques à base de cuivre, de chrome et d'arsenic.

Les restrictions de plus en plus sévères mises en place pour l'utilisation de substances toxiques dans l'environnement, ainsi que les dangers non négligeables qu'elles représentent pour la santé et pour la sécurité des gens pouvant entrer en contact avec ces produits, réduisent grandement l'intérêt de ces méthodes et laissent prévoir leur interdiction à plus ou moins long terme.

Des tentatives ont été plus récemment réalisées, afin d'améliorer la résistance du bois aux agents bactériens et fongiques naturellement présents dans la nature, en y incorporant des agents non agressifs pour l'environnement tels le bore, sous forme d'acide borique, ou du borax, agents reconnus pour leurs propriétés comme agent de préservation et pour leur bonne tolérance environnementale.

Ainsi, le brevet US-A-6,365,169 (Rosenblatt), délivré le 2 avril 2002, décrit une forme de relargage contrôlé et continu de l'iode à l'aide d'un complexe d'un amidon polyvinyle alcool (PVA) et d'iode, caractérisé par un couchage basé sur le PVA et insoluble dans l'eau chaude. L'alcool polyvinylique est présent sous forme d'un couchage réagissant avec différents types d'acides non minéraux contenant des catalyseurs/agents de traitement ou d'insolubilisation déposés sur un substrat de cellulose ou sur d'autres substrats et subséquemment complexés avec l'iode. Ces éponges constituent un dispositif antimicrobien solide qui libère des quantités contrôlées d'iode au contact pour tuer les germes et laisser des résidus minima.

Le brevet US-A-6,406,749 (Symons), délivré le 18 juin 2002, décrit un procédé pour la modification chimique du bois qui consiste à imprégner le bois, sous vide, avec de l'ammoniac gazeux. Après élimination du résidu gazeux et toujours sous pression, le bois imprégné d'ammoniaque est imprégné avec une composition d'imprégnation contenant des anhydres di ou tricarboxiliques, des alcools polyvinyliques, partiellement ou complètement saponifiés et de l'eau. La composition d'imprégnation peut en outre, et de préférence, inclure un composé du bore soluble dans l'eau. Outre le fait que la structure même du bois est affectée par la première étape de traitement par l'ammoniaque, la présence d'anhydres résulte dans une modification du bois en présence de polyvinyle alcool, afin de former une résine à base d'hexaméthylène tétramine, lequel est un donneur de formaldéhyde, composé chimique reconnu pour sa toxicité, notamment comme agent cancérigène.

Le brevet US-A-6,723,352 (Bosserman), délivré le 20 avril 2004, décrit une méthode pour la production de produits de traitement du bois et d'autres produits de la cellulose afin d'en améliorer la résistance à la combustion, ainsi que les propriétés insecticides et fongicides. Un minerai de borate de calcium, tel un colemanite, est réagi d'abord avec un acide tel l'acide acétique. Les produits de la réaction, incluant du calcium en solution, sont traités avec de l'ammoniaque, et produisent un pentaborate d'ammonium. La solution ainsi obtenue est appliquée au bois ou à d'autres produits de la cellulose par des méthodes telles que la pression, diffusion, ou immersion et/ou par traitement de trempage. Les produits ont une résistance supérieure à la lixivation lorsqu'on les compare à des composés utilisés dans les traitements conventionnels. Cette méthode implique nécessairement la présence d'une solution comportant la charge minérale à base de calcium et n'implique pas de complexation du bore par un agent complexant.

Les travaux de Hart et al. présentés dans le brevet US-A-6,844,081, délivré le 18 janvier 2005, décrivent l'application d'acide borique en présence d'un catalyseur métallocène et d'un initiateur radicalaire qui réagit dans le bois afin de former une réticulation entre les fibres de cellulose et l'acide borique. Ce réseau est par la suite recouvert d'un film scellant afin de protéger l'agent protecteur des intempéries. Cette technique s'avère complexe du fait qu'elle nécessite obligatoirement l'utilisation d'un deuxième polymère.

La demande de brevet américain US-A1-2005/0013939 (Vinden et al.) publiée le 20 janvier 2005 décrit une méthode de modification de la solubilité d'un composé du bore (triméthyl borate) en le laissant réagir avec l'humidité du bois. Cette technique qui nécessite l'utilisation de méthanol, composé très inflammable, pour l'imprégnation par le triméthyl borate, est accompagnée de risques de feu, et même d'explosion.

Au cours de la première European Conference on Wood Modification (ECWM 2003) qui s'est tenue en avril 2003 à Gand en Belgique, différentes méthodes de modification du bois ont été évoquées. Les groupements hydroxyles présents sur les parois cellulaires du bois sont responsables de plusieurs propriétés physiques et chimiques du bois. Ils jouent notamment un rôle important dans la dégradation biologique et/ou le processus physique permettant l'absorption et la désorption de l'eau. L'altération de ces fonctions peut avoir un impact important sur l'hydrophilicité du bois. Elle aura également un impact sur la reconnaissance des composantes du bois par les enzymes des champignons de pourritures responsables de la digestion du bois et de sa transformation en sucres.

Les fonctions hydroxyles du bois peuvent être altérées par un nombre important de procédés de modification chimique. Parmi les très nombreuses possibilités de réactions pouvant être impliquées, on peut mentionner celles de type : formation d'éthers, addition d'un acétal ou d'une fonction carbonyle, estérification, formation d'uréthanes, oligoestérification (combinaison de plus d'une réaction), oxydation chimique, sylilation, acétylation, furfurylation et formation d'une résine de mélamine formaldéhyde.

À ces modifications chimiques, on peut ajouter les modifications thermiques. Elles impliquent un traitement thermique du bois auquel s'ajoute normalement une imprégnation d'huile dans le bois. En appliquant de la chaleur, certaines fonctions des polymères du bois sont brisées et de nouvelles fonctions hydrophobes sont formées de façon permanente.

Le procédé OHT (Oil-Heat Treatment) de Menz Holz, décrit par H. Militz dans Thermal Treatment of Wood : Eurpean Process and their background, IRG 33rd Annual meeting, a pour finalité d'améliorer la durée de vie de bois d'extérieur sans contact avec le sol et il s'effectue en enceinte fermée. Après avoir mis la charge de bois dans un réservoir étanche, une huile chaude est ajoutée puis maintenue à haute température (180-220°C) afin d'imprégner le bois. Pour que le traitement soit efficace et que les modifications chimiques aient lieu, il est nécessaire de maintenir la température au coeur de l'échantillon plus de 2 heures (normalement entre 2 et 4 heures).

Pour sa part, le procédé baptisé Royale Process d'Osmose décrit par Powell dans Powell M.R. (2003); European Conference on Wood Modification, qui a aussi pour finalité d'améliorer la durée de vie du bois d'extérieur, est réalisé à plus basse température (60-90°C) afin d'éviter les modifications chimiques et simplement afin de permettre l'imprégnation du bois par l'huile. Le but de ce traitement est de permettre d'obtenir un bois à faible taux d'humidité. Un vide subséquent à l'imprégnation permet d'éliminer l'excès d'huile en surface. La sélection de l'huile est alors très importante en fonction de l'application désirée. Des huiles à haut taux d'acide gras insaturé permettent une polymérisation oxydante avec l'oxygène de l'air. Ce traitement permet d'éliminer l'eau du bois, d'éviter sa reprise et permet également d'améliorer la stabilité dimensionnelle.

Robert H. White dans le document Flame Retardancy of Wood, pages 251 à 257, publié en 1992 dans Recent advances in flame retardancy of polymeric materials : Proceedings of 3rd annual BCC conference on flame retardancy, 1992 Mai 19-21, Stamford, CT. Norwalk, CT: Business Communications Company, Inc.; 192 :250-257, décrit dans le deuxième paragraphe de la page 254, l'utilisation conjointe de sulfate d'ammonium, de phosphate de diammonium, de borax et de fluorure de sodium pour obtenir simultanément une résistance aux flammes et un effet préservatif. Le risque de relarguage de phosphates et de sulfates dans l'environnement limite l'intérêt de cette méthode.

Susan L. Levan dans Chemistry of Fire Retardancy, publié en 1984 dans Advances in Chemical Series 207, résume en pages 563 à 564 des propriétés des différents composés à base de bore et de leur capacité à retarder le feu. Plusieurs composés dont l'acide borique et le tetraborate de sodium (borax) sont mentionnés. Le borax inhibe l'avancement des flammes mais a peu d'impact sur le "smoldering" ou le "glowing". De son coté, l'acide borique réduit le "smoldering" et le "glowing", mais a peu d'effet sur la propagation des flammes. Ces deux composés sont donc utilisés conjointement. Une forme couramment utilisée comme produit retardant la flamme est le polybore.

Les procédés de l'art antérieur qui ont permis d'améliorer de façon significative la résistance du bois aux agents bactériens, fongiques, insecticides ou aux flammes impliquent l'incorporation d'agents chimiques toxiques dans le bois et leur relarguage, notamment sous l'effet des pluies, qui représente une agression pour l'environnement dans lequel de tels bois sont placés.

Les autres procédés, qui mettent en oeuvre l'incorporation d'agents bactéricides et/ou fongicides peu ou non toxiques, présentent notamment l'inconvénient d'un relargage rapide des agents protecteurs qui sont rapidement libérés dans l'environnement et l'objet en bois traité est simultanément à nouveau rapidement fragilisé.

Il existait donc un besoin pour des matières solides à base de polysaccharides ayant une bonne résistance à l'attaque des bactéries, des champignons et des flammes, et respectueux de l'environnement.

Il existait également un besoin pour des matières à base de polysaccharides ayant une résistance remarquable à l'attaque des bactéries, des champignons et des flammes, et contenant une quantité limitée de produits non totalement respectueux de l'environnement.

Il existait également un besoin pour des objets constitués au moins partiellement d'une matière solide à base de polysaccharides, stables dans un environnement agressif et non susceptibles de relarguer des agents toxiques pour l'environnement ou pour leurs utilisateurs.

### SOMMAIRE

Selon un aspect général de l'invention, il est proposé une matière solide à base de polysaccharides comprenant au moins un agent actif choisi parmi les agents bactéricides et/ou fongiques et/ou insecticides et/ou retardateurs de combustion, ledit agent actif étant constitué par plus de 50 % en poids d'au moins un composé choisi dans le groupe constitué par le bore, les dérivés du bore, la silice, les dérivés de la silice, l'aluminium, les dérivés de l'aluminium, les dérivés aluminosilicates, le phosphore, les dérivés du phosphore, l'iode, les dérivés de l'iode et les mélanges d'au moins deux de ces derniers; ainsi qu'au moins un agent complexant particulier complexé au moins partiellement avec l'agent actif et une matrice polymérique formant éventuellement des liaisons avec des fonctions des polysaccharides; ledit matériau étant caractérisé en ce que l'agent complexant est chimiquement lié à des fonctions de la matrice polymère.

Cette matière présente une résistance remarquable aux agressions environnementales et n'est pas toxique pour l'environnement naturel et humain. Parmi les nombreuses applications, les matériaux obtenus selon l'invention sont avantageusement utilisables dans la préparation de jouets, de meubles d'extérieur, de bois de construction, de bois de patio et de bois d'utilité (poteaux de bois sur un réseau de distribution d'électricité).

Un premier objet de la présente demande est notamment constitué par une matière solide à base de polysaccharides, de préférence solide à température ambiante, comprenant
- au moins un agent actif choisi parmi les agents bactéricides, les agents fongicides, les agents insecticides et les agents retardateurs de combustion, ledit agent actif étant constitué par plus de 50 % en poids, plus avantageusement encore par plus de 60 %, de façon plus préférentielle encore par plus de 90 %, d'au moins un composé choisi dans le groupe constitué par le bore, les dérivés du bore, la silice, les dérivés de la silice, l'aluminium, les dérivés de l'aluminium, les dérivés aluminosilicates, le phosphore,les dérivés du phosphore, l'iode, les dérivés oxygénés de l'iode et leurs mélanges ;
- au moins un agent complexant au moins partiellement l'agent actif, et
- une matrice polymérique formant éventuellement des liaisons avec des fonctions des polysaccharides ;
ledit matériau étant caractérisé en ce que l'agent complexant est chimiquement lié à des fonctions de la matrice polymère.

Selon un mode préférentiel, les matières solides à base de polysaccharides selon l'invention contiennent au moins un agent actif à base de bore ou d'un dérivé du bore; cet agent est choisi de préférence dans le groupe des dérivés oxygénés du bore, tels les borates.

Selon un autre mode préférentiel de réalisation, les matières solides à base de polysaccharides selon l'invention contiennent au moins un agent actif à base de silice ou à base d'un dérivé de la silice; cet agent est choisi de préférence dans le groupe des silices oxygénées, tel le sodium silicate ou l'acide silicique.

Selon un autre mode préférentiel et avantageux, les matières solides à base de polysaccharides selon l'invention contiennent au moins un agent actif à base d'aluminium ou à base d'un dérivé d'aluminium; cet agent est choisi de préférence dans les dérivés oxygénés de l'aluminium, tel l'aluminate de sodium.

Selon un autre mode préférentiel, les matières solides à base de polysaccharides de l'invention contiennent au moins un agent actif à base d'aluminosilicates tels l'aluminosilicate de sodium et/ou le silicate tricalciques d'alumino-calcium.

Selon un autre mode préférentiel et avantageux, les matières solides à base de polysaccharides selon l'invention contiennent au moins un agent actif à base de phosphore ou d'un dérivé du phosphore choisi de préférence dans le groupe des dérivés oxygénés du phosphore tels l'ammonium phosphate, le di ammonium phosphate, le phosphate de sodium et/ou le phosphate de potassium.

Selon un autre mode préférentiel, les matières solides à base de polysaccharides de l'invention contiennent au moins un agent actif à base d'iode ou d'un dérivé oxygéné de l'iode tel que l'iodate de potassium et/ou l'iodate de sodium.

Selon une variante d'un intérêt particulier, l'agent actif présent dans les matières à base de polysaccharides de l'invention comprend en outre moins de 40 % d'un composé choisi dans le groupe constitué par l'acide de chromate de cuivre (ACC), l'arséniate de cuivre ammoniacal (ACA), l'arséniate de cuivre, zinc ammoniacal (ACZA), les composés d'arséniate de cuivre chromaté (CCA type A, B et/ou C), le chlorure de zinc chromaté (CZC), les composés à base d'alkyl d'ammonium (AAC) contenant principalement du chlorure de dodécyldiméthyl ammonium (DDAC minimum de 90 %), les cuivre ammoniacal quaternaire ACQ de type A, B, C et/ou D), le bis (diméthyldithiocarbamate) de cuivre (CDDC), le citrate de cuivre ammoniacal (CC), le cuivre-azole (CA) de type A (CBA-A), le cuivre-azole de type B (CA-B), le Cuivre HDO de type A (CX-A) dans lequel HDO est le Bis-(N-cyclohehyldiazeniumdioxy) et leurs mélanges ; de préférence l'agent actif est choisi dans le groupe constitué par les préservatifs solubles à l'eau listés dans le "Book of Standards 2006" de l'AWPA, section P5-06, pages 111 à 116, ISSN 1534-195X.

Selon un mode préférentiel et avantageux de réalisation de l'invention, la quantité totale de composé actif et d'agent complexant etde matrice polymérique présente dans ladite matière à base de polysaccharides représente de 1 à 30 % en poids de ladite matière à base de polysaccharides. Cette quantité varie sensiblement suivant le type de bois utilisé. Ainsi, pour un poteau de pin gris, la valeur peut être de 7 % en poids de composé actif et d'agent complexant etu de matrice polymérique par rapport au poids total d'un poteau traité. Par contre, pour un poteau de pin jaune, la valeur peut être de 22 % en poids de composé actif et d'agent complexant et de matrice polymérique par rapport au poids total d'un poteau traité.

Selon un mode avantageux de réalisation de l'invention, ledit agent complexant forme pour au moins 1 %, de préférence pour au moins 25 %, plus préférentiellement encore pour au moins 50 %, des liaisons chimiques avec des fonctions de la matrice polymère.

Une sous-famille avantageuse est constituée par les matières solides à base de polysaccharides comportant une matrice polymérique, et dans laquelle les atomes de bore et/ou de silice et/ou d'aluminium et/ou de phosphore et/ou d'iode et/ou les fonctions contenant du bore et/ou les fonctions contenant de la silice et/ou les fonctions contenant de l'aluminium et/ou les fonctions contenant du phosphore et/ou les fonctions contenant de l'iode, présents dans la matière solide à base de polysaccharides, sont au moins partiellement lié(e)s à au moins une fonction de la matrice polymérique.

Une autre sous famille d'un intérêt particulier est constituée par les matières solides à base de polysaccharides dans lesquelles les atomes de bore et/ou de silice et/ou d'aluminium et/ou de phosphore et/ou d'iode présents dans ladite matière solide à base de polysaccharides ont au moins partiellement des interactions chimiques avec un des agents complexant présents.

Avantageusement, les atomes de bore et/ou de la silice et/ou d'aluminium et/ou du phosphore et/ou de l'iode présents dans ladite matière à base de polysaccharides forment au moins partiellement des liens de coordination avec un des agents complexants présents.

Selon un mode avantageux de réalisation de l'invention, la quantité d'agent actif présent par m³ de matière à base de polysaccharides correspond à un équivalent silice et/ou aluminium et/ou phosphore et/ou d'iode supérieur à 0,1 kg/m³; de préférence cette quantité est supérieure à 0,2 kg/m³, plus préférentiellement cette quantité est comprise entre 0,5 et 30 kg/m³, de préférence elle varie de 1 à 15 kg/m³, et plus avantageusement encore elle varie de 2 à 10 kg/m³, plus avantageusement encore elle est d'environ 5 kg/m³.

De préférence, la quantité d'agent complexant, présent dans la matière à base de polysaccharides, est supérieure à 0,5, de préférence supérieure à 1 Mole par mole de bore et/ou de silice et/ou d'aluminium et/ou de phosphore et/ou d'iode présent(s); de préférence cette quantité est comprise entre 1 et 10 Moles, plus préférentiellement encore cette quantité est comprise entre 1 et 5 Moles, plus avantageusement encore elle est d'environ 2 Moles d'agent chélatant par mole de bore et/ou de silice et/ou d'aluminium et/ou de phosphore et/ou de l'iode présent(s) dans la matière à base de polysaccharides.

Selon un mode de réalisation de l'invention d'un intérêt particulier, l'agent complexant du bore et/ou de la silice et/ou de l'aluminium et/ou du phosphore et/ou de l'iode est, choisi dans le groupe des composés chimiques comportant des fonctions hydroxys et/ou amines et/ou d'acide carboxylique.

Avantageusement, l'agent complexant du bore est choisi dans le groupe des composés chimiques comportant des fonctions hydroxys et/ou amines et/ou acide carboxyliques telles une fonction acide acétique, ou plus préférentiellement choisi dans le groupe constitué par les polyamines, polyols, polyolamines et les mélanges d'au moins deux de ces derniers. Avantageusement, les fonctions amines sont de type primaire ou secondaire et les fonctions polyols de types diol, plus préférentiellement encore de type diols vicinaux, les polyols comportent avantageusement de 2 à 7 atomes de carbone dans la chaîne. L'agent complexant du bore est quant à lui choisi de préférence dans le groupe constitué par le N-méthyl-D-glucamine (NMG), le tris(hydroxyméthyl)aminométhane (THAM), le 1,3-bis[tris(hydroxyméthyl) méthylamino]propane, l'(hydroxyéthyl)amine, la di(hydroxyéthyl)amine, les acides iminodicarboxyliques tels l'acide iminodicarboxylique, l'acide imino diacétique et les mélanges d'au moins deux de ces derniers.

De préférence, l'agent complexant du bore et/ou de la silice et/ou de l'aluminium et/ou du phosphore et/ou de l'iode et susceptible de former des liaisons chimiques avec des fonctions des polysaccharides est choisi dans le groupe composé des agents chélatants décrits dans les deux paragraphes précédents, en rapport avec la nature de l'atome à complexer, et qui comportent une fonction chimique pouvant réagir sur des fonctions hydroxys et/ou méthoxys présentes dans les composants polysaccharidiques de la matière à base de polysaccharides; de telles fonctions additionnelles sont de préférence des fonctions halogénées ou époxydes, plus préférentiellement encore l'agent complexant du bore et susceptible de former des liaisons chimiques avec des fonctions des polysaccharides est choisi dans le groupe constitué par l'épichlorohydrine, les polyéthyleneglycol diglycidyl ethers, les molécules de formule Cl-CH₂CH(OH)-N(CH₃)-(CHOH)₅-CH₂OH, Cl-CH₂CH(OH)-NH-C-(CHOH)₃ et les mélanges d'au moins deux de ces derniers.

Une autre sous-famille de matières solides à base de polysaccharides, selon l'invention et d'un intérêt particulier, est caractérisée en ce que la matrice polymère est choisie dans le groupe constitué par les résines époxy, les polyéthers, les polyvinyl alcools, les polyuréthanes, les nylonset les mélanges d'au moins deux d'entre eux ; de préférence la matrice polymérique est choisie dans le groupe constitué par les polymères obtenus par polymérisation d'un monomère soluble à l'eau contenant ledit agent complexant, plus préférentiellement encore il s'agit d'un monomère obtenu par la réaction d'un glycidyl méthacrylate et de N-méthyl D-glucamine (NMG) afin de produire du (N-glucidol-N-méthyl)-2-hydroxypropyl méthacrylate (GMHP).

La matrice polymère est de préférence une résine époxy obtenue par réticulation *in-situ* d'un polyéthylène glycol diglycidyl éther, en présence de fonctions amines et/ou hydroxy, de préférence en présence de diamines, et en présence d'au moins un agent chélatant contenant une amine primaire ou secondaire qui est de préférence de la NMG, du THAM ou un mélange de ces dernières, la matrice polymérique à laquelle est greffée l'agent complexant ayant une taille inférieure à celle des cavités présentes dans la matière à base de polysaccharides. La matrice est choisie avantageusement dans le groupe des polyacrylates, de préférence dans le groupe des polyalkylacrylate solubles au moins partiellement dans l'eau et qui contiennent l'agent chélatant sous forme de monomère: le (N-glucidol-N-méthyl)-2-hydroxypropyl méthacrylate (GMHP).

Les polyéthers quant à eux sont avantageusement obtenus :
- à partir d'au moins un polyéthylène glycol divinyl éther au moins partiellement soluble à l'eau et par réticulation à l'aide d'un amorceur cationique en présence d'au moins un agent chélatant choisi de préférence dans le groupe des agents chélatants possédant une fonction vinyl éther; ou
- par réticulation de polyethylene glycol acrylate ou diméthacrylate de masse moléculaire moyenne voisine ou inférieure à 1000g/mol, en présence d'un amorceur thermique et, de préférence, en présence également d'au moins un agent chélatant possédant une fonction acrylate et/ou méthacrylate.

Une autre sous-famille préférentielle des matières solides à base de polysaccharides selon l'invention est constituée par les matières solides dans lesquelles la matrice polymérique, susceptible de former des liaisons avec les fonctions de la matière et ayant une taille lui permettant de s'insérer dans les cavités de la matière à base de polysaccharides, est choisie dans le groupe constitué par les résines époxy, les polyéthers, les polyvinyles alcools, les polyuréthanes, les nylons et les mélanges d'au moins 2 de ces derniers; de préférence la matrice polymérique est choisie dans le groupe constitué par les résines époxy solubles dans un solvant qui est de préférence un solvant aqueux, et/ou par les polyéthers solubles dans un solvant, de préférence dans un solvant aqueux, plus préférentiellement encore il s'agit d'une matrice polymérique constituée d'une résine époxy obtenue à l'aide d'un polyéther soluble dans l'eau, plus avantageusement encore il s'agit d'une résine époxy préparée à l'aide d'un agent chélatant possédant des fonctions amines et hydroxys et à l'aide d'une molécule soluble à l'eau contenant plus d'une fonction glycidyl éther (GE) tels les polyéthylène glycol diglycidyléther, de préférence le polyéthylène glycol diglycidyléther avec un poids moléculaire moyen de l'ordre de 526 g/mol.

Avantageusement, les matières solides à base de polysaccharides de l'invention comportent au moins 1 %, de préférence au moins 50 %, plus avantageusement encore au moins 80 % en poids de polysaccharides.

De préférence, dans les matières solides à base de polysaccharides de l'invention, entre 10 et 100 % des polysaccharides présents ont un poids moléculaire moyen compris entre 1000 et 1000000 g/mol, plus préférentiellement encore environ 45 % des polysaccharides présents ont un poids moléculaire compris entre 200000 et 600000 g/mol.

De façon plus préférentielle encore, dans les matières solides à base de polysaccharides de l'invention, les polysaccharides sont choisis dans le groupe constitué par: les hémicelluloses, les celluloses, les celluloses modifiées chimiquement et/ou physiquement, les amidons naturels, les amidons modifiés chimiquement et/ou physiquement, et les mélanges d'au moins deux d'entre eux.

Plus avantageusement encore, les matières solides à base de polysaccharides selon l'invention, comportent en poids:
- de 1 à 150 %, de préférence entre 15 et 40 %, plus préférentiellement encore entre 20 et 30 % d'eau;
- de 26 à 34 %, plus préférentiellement encore environ 29 % de lignigne;
- de 16 à 22 %, plus préférentiellement encore environ 18 % d'hémicellulose; et
- de 37 à 61 %, plus préférentiellement encore environ 45 % de cellulose,
les % étant exprimés par rapport au poids de la matière solide à base de polysaccharides lorsqu'elle est sous sa forme anhydre.

Les matières solides à base de polysaccharides de l'invention sont avantageusement à base d'un bois qui est choisi de préférence dans le groupe des conifères, et plus préférentiellement encore choisi dans le groupe constitué par les cèdres (dont le thuya du Canada et le thuya géant de l'ouest), les pins tordus (dont le pin de Murray), les pins jaunes (dont le pin ponderosa), les pins gris, les pins rouges, les pins blancs, les pins argentés, les pins rigides, les pins sylvestres, les sapins Douglas, la pruche du Canada et la pruche de l'ouest.

Une sous-famille de matière solide à base de polysaccharides, selon l'invention et d'un intérêt particulier, est caractérisée en ce que la quantité de composés bactéricides et/ou fongicides et/ou insecticides et/ou retardateurs de flamme non lixiviés présents dans la matière solide à base de polysaccharide, mesurée dans un test de lixiviation réalisé selon la méthode de lessivage standard E11-06 de l'AWPA et pendant une période normale de test de 14 jours, est augmentée, de préférence d'au moins 1 %, plus préférentiellement encore d'au moins 10 %, et plus avantageusement encore d'au moins 20 %.

Un deuxième objet de la présente invention est constitué par les procédés d'imprégnation d'une matière à base de polysaccharides.

Selon une première variante du deuxième objet de la présente invention, le procédé d'imprégnation d'une matière à base de polysaccharidiques, ayant une teneur en matière sèche supérieure à 20 % et qui comporte des cavités, comprend au moins les étapes suivantes :
- abaissement du taux d'humidité relative de la matière à base de polysaccharides à une valeur comprise entre 15 et 35 %;
- insertion, dans les cellules de la matière à base de polysaccharides, d'une matrice polymère dans laquelle est incorporée une molécule complexante du bore et/ou de la silice et/ou de l'aluminium et/ou du phosphore; et
- d'imprégnation de la matière à base de polysaccharides modifiée obtenue dans l'étape précédente à l'aide d'une solution à base de bore et/ou de silice et/ou d'aluminium et/ou de phosphore.

Selon une deuxième variante du deuxième objet de la présente invention, le procédé d'imprégnation d'une matière à base de polysaccharidiques comprend au moins les étapes suivantes :
a') préparation d'une solution d'imprégnation qui contient le composé de formule ClCH₂CH(OH)CH₂NHC(CHOH)₃, par dissolution de 0,05 à 0,50 mol, de THAM dans 50 à 500 ml d'eau, de préférence dans 125 ml d'eau ; ajout de 0,06 à 0,60 mol, de préférence de 0,12 mol (excès de 20 %) d'épichlorohydrine (11,1 grammes), et agitation de la solution obtenue, de préférence pendant une heure et avantageusement à température ambiante ;
b') imprégnation de la matière à base de polysaccharides par la solution d'imprégnation obtenue à un pH comprise entre 7 et 13,
c') chauffage entre 50 et 70 °C, de préférence à 60 °C, pendant une durée de 0,5 à 24 heures, de préférence pendant 18 heures ; et
d') imprégnation de la matière à base de polysaccharides ainsi modifiée par une solution aqueuse d'acide borique d'environ 0,33 M (2% massique) dont le pH est passé de 4,68 à 10 par l'ajout de 4,58 ml de NaOH (50%).

Selon ce procédé, les étapes b') et d') sont de préférence réalisées simultanément et elles sont suivies par l'étape c').
Ces procédés présentent un intérêt particulier lorsqu'on les applique à des matières solides à base de polysaccharides, et plus particulièrement à base de cellulose, de panneaux de particules agglomérées, de contreplaqué ou de panneaux à copeaux orientés. La matière à base de cellulose est alors avantageusement du bois, de préférence un conifère, de préférence du pin rouge ou du pin gris.

Un troisième objet de la présente invention est constitué par un procédé de traitement d'une matière à base de polysaccharides comprenant les étapes de :
a) imprégnation de ladite matière à l'aide d'une solution d'imprégnation obtenue par :
   - dissolution dans une solution aqueuse d'une quantité de tris(hydroxyméthyl)méthylamine (THAM) et/ou de NMG comprise entre 0,05 M et 5 M;
   - ajout d'un excès d'épichlorohydrine dans la solution préparée dans l'étape précédente;
   - agitation de la solution obtenue dans l'étape précédente; et
   - extraction de l'excès d'épichlorohydrine à l'aide d'un solvant qui est de préférence de type organique, à un pH compris entre 8 et 13 ;
b) chauffage de la matière imprégnée à une température comprise entre 40 et 105°C, pendant une durée comprise entre 15 minutes et 24 heures, et
c) imprégnation de la matière chauffée obtenue à l'étape précédente à l'aide d'une solution d'un composé choisi dans le groupe constitué par l'acide borique, l'octoborate de sodium tetrahydraté (ODT), l'acide phosphoreux, le phosphate d'ammonium, le phosphate de sodium et les mélanges d'au moins 2 de ces derniers, ladite solution ayant une concentration permettant d'obtenir un ratio molaire entre l'agent complexant et la molécule de bore variant entre 0,1 et 2,0, de préférence entre 0,2 et 1,0, et plus avantageusement un ratio molaire d'environ 0,5 d'acide borique versus l'agent complexant..

Selon ce procédé, les étapes a) et c) sont de préférence réalisées simultanément et elles sont suivies par l'étape b).
De préférence, la dissolution de la tris(hydroxyméthyl)méthylamine (THAM) et/ou de NMG se fait dans une solution aqueuse à au moins 80 %, plus préférentiellement encore dans l'eau.

Avantageusement, la quantité de tris(hydroxyméthyl)méthylamine (THAM) et/ou de NMG dissoute est comprise entre 0,2 et 1 M.

De façon avantageuse, l'excès d'épichlorohydrine utilisé lors de la préparation de la solution d'imprégnation peut aller jusqu'à 30 %, plus avantageusement encore l'excès molaire est d'environ 20 % d'épichlorohydrine. L'excès est de préférence obtenu par ajout d'environ 0,12 mole (excès de 20 %) d'épichlorohydrine pour 0,1 mole de NMG ou de THAM (11,1 grammes).

Selon un mode particulier de réalisation, la solution d'imprégnation obtenue dans l'étape d'ajout d'un excès d'épichlorohydrine est agitée durant une heure.

Avantageusement, la température d'agitation est comprise entre 5 et 60°C, plus préférentiellement encore entre 10 et 50°C, plus avantageusement encore cette température correspond à la température ambiante.

De préférence, le solvant utilisé pour la préparation de la solution d'imprégnation est de type organique et il est choisi dans le groupe constitué par les solvants insolubles dans l'eau et pouvant extraire la molécule synthétisée. Il peut ainsi s'agir d'un solvant halogéné et, de préférence, de dichlorométhane.

Avantageusement, l'extraction se fait préférentiellement en au moins 2 fois successives avec un volume de solvant organique représentant au plus 2 fois le volume de la solution obtenue dans l'étape précédente.

Le pH des solutions d'imprégnation de l'invention ainsi obtenues est plus préférentiellement d'environ 10 et est régulé de préférence à l'aide de NaOH.

Les solutions d'imprégnation de la présente invention sont particulièrement adaptées pour le traitement des matières à base de polysaccharides dans lesquelles la partie polysaccharidique est à base de cellulose et plus préférentiellement à base de bois.

Une sous-famille préférentielle de solutions d'imprégnation de l'invention est constituée par les solutions à base de polysaccharides (de préférence à base de cellulose et plus préférentiellement par les bois) et qui comprennent en poids :
- de 1 à 50 %, de préférence de 2 à 20 %, plus préférentiellement de 5 à 15 % d'agent complexant;
- de 40 à 99 %, de préférence de 80 à 95 %, plus préférentiellement encore environ 90 % d'eau ou d'une solution à base d'eau; et
- moins de 10 % d'impuretés et/ou d'additifs, les additifs étant de préférence choisis dans le groupe constitué par les résines "modificatrices", les diluants réactifs, les surfactants afin de faciliter l'imprégnation ou d'un tampon afin de stabiliser la zone ciblée ou les produits de remplissage, de préférences les additifs étant choisis dans le groupe des aluminas ou des silicas.

Une sous-famille particulière de solutions d'imprégnation de l'invention est constituée par les solutions d'imprégnation dans lesquelles les impuretés sont choisies dans le groupe constitué par les dérivés de la molécule de liaison (épichlorohydrine, éthylèneglycol, glycidyl éther, glycidyl méthacrylate, diglycidyl éther, diglycidyl méthacrylate, ...) ou par les produits sous-dérivés de la réaction entre la molécule de liaison et la fonction complexante qui est de préférence de la NMG, THAM ou un mélange de ces dernières.

Selon un mode préférentiel, les matrices polymères de l'invention incorporent du bore et/ou de la silice et/ou de l'aluminium et/ou du phosphore comme agent de préservation, et elles sont caractérisées par la présence d'au moins un agent chélatant, greffé sur ladite matrice polymérique, dans une quantité représentant de 1 à 80 % massique de la matrice polymérique, plus préférentiellement de 2 à 20 % massique, et plus préférentiellement encore d'environ 10 % massique; l'agent de préservation à base de bore, de silice de phosphore ou d'aluminium représente de 1 à 80 % massique de la matrice polymérique, plus préférentiellement de 2 à 20 % massique et plus avantageusement encore il se trouve dans un ratio molaire de 2:1 d'agent chélatant par rapport à l'agent de préservation.
L'étape b) de chauffage de la matière imprégnée est de préférence à une température comprise entre 50 et 80°C, plus préfére ntiellement encore à une température d'environ 60°C, pour une durée comp rise de préférence entre 15 minutes et 24 heures, plus préférentiellement encore comprise entre 30 minutes et 1 heure.

Selon un mode avantageux de réalisation de la présente invention, dans l'étape a') du traitement, la solution est préparée de préférence dans l'eau et contient :
- de 0,2 à 2,5 %, de préférence environ 1,2 % de H₃BO₃;
- de 10 à 40 %, de préférence environ 20 % de GMHP en solution; et
- de 0,1 à 2,5 %, de préférence environ 1 % d'un thermoinitiateur qui est avantageusement du VA-060.

Selon un mode particulièrement avantageux de réalisation de l'invention, les solutions d'imprégnation de l'invention sont appliquées à raison d'au moins 5 kg de solution de traitement, de préférence d'au moins 15 kg de solution de traitement, plus avantageusement encore à raison de 20 à 120 kg de solution ainsi préparée par m³ total de bois à traiter.

Ce traitement est réalisé avantageusement de façon périodique, de préférence tous les 5 ans et répété pour prolonger la durée de vie de la matière à base de polysaccharides que l'on souhaite protéger.

Les objets contenant au moins une des matières solides à base de polysaccharides telles que définies dans le premier objet de la présente invention ou telles qu'obtenues par mise en oeuvre d'un des procédés définis dans le deuxième objet de la présente invention sont avantageusement préparés par usinage, sculpture, compactage, moulage et ils sont avantageusement choisis dans le groupe des jouets, meubles d'extérieurs, bois de construction, bois de patio et bois d'utilité.

Ces objets à base de polysaccharides présentent des propriétés remarquables de conservation, notamment en milieu extérieur et/ou en milieu particulièrement agressif(s) et ce, en raison de leur stabilité particulière en présence d'agents bactériens, fongiques, insecticides et/ou retardateurs de flammes. Ces propriétés exceptionnelles sont obtenues sans incorporation, dans le matériau constitutif des objets, de produits chimiques toxiques pour l'environnement, ou par incorporation de quantité réduites de produits chimiques potentiellement dommageables pour l'environnement.

À titre d'exemples non limitatifs on peut citer les jouets, les meubles d'extérieurs, les bois de construction, les bois d'utilité et tout objet habituellement utilisé dans les milieux humides, tropicaux ou subtropicaux, qui se caractérisent par une forte teneur en humidité favorable au développement particulièrement agressif d'agents bactériens ou fongiques.

### DESCRIPTON BRÈVE DES DESSINS

Figure 1 montre des cellules de bois avec ajout d'agents chélatants "A" du bore sans être fixés aux cellules du bois.
Figure 2 montre des cellules de bois avec l'ajout d'agents chélatants "A" du bore fixés sur les parois du bois.
Figure 3 montre des cellules de bois avec l'ajout d'agents chélatants "A" du bore fixés sur une matrice polymérique.
Figure 4 montre des cellules de bois avec l'ajout d'agents chélatants "A" du bore fixés sur une matrice polymérique liée aux parois des cellules du bois.
Figure 5 est un graphique illustrant la perte en bore en fonction du temps pour un bois imprégnée avec une solution d'imprégnation décrite de façon détaillée dans l'exemple 5; le bois, dont 5 faces du cube sont capées, est soumis au test de lixiviation selon la procédure E11-06 de l'AWPA.

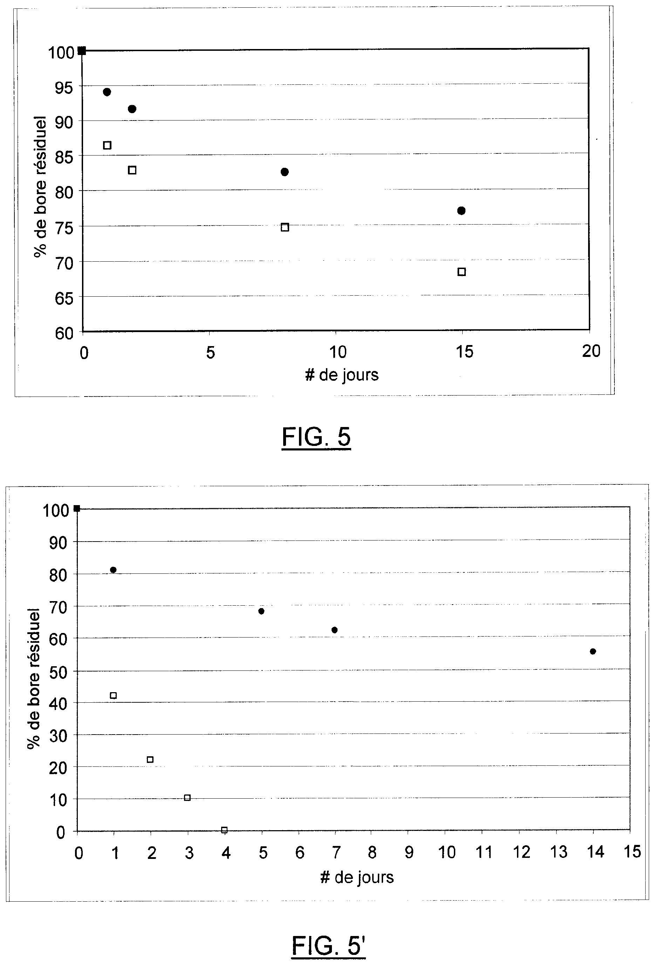

Figure 5' est un graphique illustrant la perte en bore en fonction du temps pour un bois imprégnée avec une solution d'imprégnation décrite de façon détaillée dans l'exemple 5'; le bois est soumis au test de lixiviation selon la procédure E11-06 de l'AWPA.

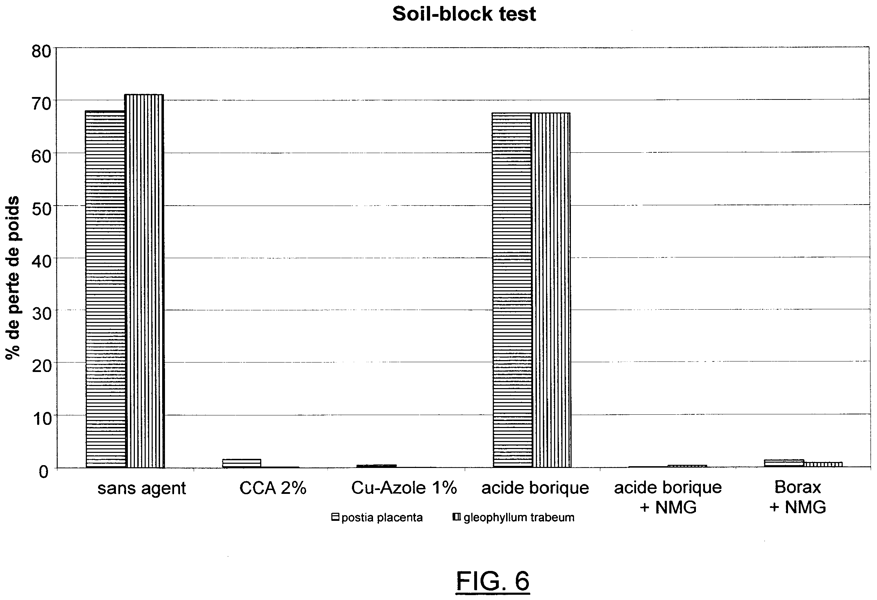

Figure 6 est un graphique illustrant l'évaluation de l'efficacité de préservation sur des échantillons de bois traités puis "lixiviés" selon le test E10-06 (essai sur sol) effectué à l'aide de cultures des pourritures brunes suivantes : *postia placenta* et *gleophyllum trabeum.*

### DESCRIPTION DÉTAILLÉE DES RÉALISATIONS PRÉFÉRÉES

Dans le cadre de la présente divulgation, les définitions ci-après sont utilisées.

Agent actif ou agent de préservation : on appelle composé protecteur, un composé présentant au moins une des propriétés suivantes : bactéricide, fongicide, insecticide, et retardateur de flamme. Ces composés protecteurs sont choisis de façon avantageuse dans le groupe constitué par le bore, les dérivés du bore (de préférence les dérivés oxygénés du bore tels les borates), la silice, les dérivés de la silice (de préférence les dérivés oxygénés de la silice), l'aluminium, les dérivés de l'aluminium (de préférence les dérivés oxygénés de l'aluminium tels les alumines), les dérivés aluminosilicates, les dérivés du phosphore (de préférence les dérivés oxygénés du phosphore), l'iode, les dérivés oxygénés de l'iode et les mélanges d'au moins deux de ces derniers. Parmi les dérivés oxygénés du bore on peut mentionner l'acide borique. On peut également mentionner les borate de sodium, tetraborate de sodium, octaborate disodique tetrahydraté (ODT), sodium metaborate, ammonium pentaborate, borate de potassium, tetraborate de potassium, potassium pentaborate.

Polysaccharides : Il s'agit de bois, amidons, fécules, gommes guars, gommes xanthates, celluloses, chitines, chitosanes, glycanes, galactanes, glucanes, hémicelluloses, pectines, mannanes, dextrines; les amidons préférés sont les fécules de pomme de terre, les amidons de mais, de blé, de tapioca, de riz, les amidons cireux, d'orge, etc.; les celluloses préférées sont les carboxycelluloses, les méthoxyéthyl celluloses, les carboxy méthyl hydroxy celluloses, les méthyl celluloses, les hydroxyéthyl celluloses, etc. Les polysaccharides considérés sont d'origine naturelle, non modifiés, ou modifiés par un traitement chimique et/ou physique.

Matière solides à base de polysaccharides : il s'agit de toute matière contenant un certain pourcentage de polysaccharides et solide, de préférence à température ambiante. Il peut s'agir de façon non limitative de bois, de panneaux de particules agglomérées, de contreplaqué, ou de panneaux à copeaux orientés.

Les matières solides de l'invention à base de polysaccharides contiennent avantageusement des cavités internes dont la paroi est principalement constituée de carbohydrates et dont la taille est avantageusement inférieure à 5.10⁻² mm³, et plus préférentiellement comprise entre 5.10⁻⁵ et 2.10⁻² mm³.

Résine époxy : Il s'agit avantageusement de toute résine époxy soluble dans l'eau. L'éthylène glycol diglycidyl éther (CAS : 2224-15-9), le diéthylène glycol diglycidyl éther (CAS: 4206-61-5), le 1,4-butanediol diglycidyl éther (CAS: 2425-79-8) et le polyéthylèneglycol diglycidyl éther (Mw=526) (CAS : 26403-72-5), tous disponibles chez Sigma-Aldrich, sont des exemples de candidats potentiels.

Molécule complexante : elle contient, en général, des fonctions hydroxys sur des carbones vicinaux ou une forte concentration de fonctions hydroxys. Les molécules sélectionnées possèdent également une fonction amine. La présence d'une forte concentration de fonctions hydroxys permet la complexation des borates, alors que les atomes d'azote permettent de stabiliser ces interactions en préservant le pH "local" à une valeur acceptable afin de favoriser la complexation du bore.

Agent de "cuisson" (Durcisseur) : leur fonction est d'assurer la polymérisation des espèces réactives. On peut avantageusement les choisir parmi: les amines et les polyamines primaires ou secondaires, les anhydrides, les polyamides, les alcools, etc.; il s'agit de sélectionner des molécules solubles, ce qui amène une simplification considérable lors de la mise en oeuvre des procédés d'imprégnation de l'invention.

Les exemples ci-après réalisés sur du bois sont donnés à titre illustratif seulement et ne seraient être interprétés comme constituant une quelconque limitation de l'invention.

Par un traitement chimique du bois, un agent complexant est introduit dans les cellules du bois ou fixé sur les cellules de bois. À cet agent sera ajouté de l'acide borique ou de l'octaborate disodique tetrahydraté (ODT) afin de protéger le bois de la pourriture ou des insectes nuisibles. L'utilisation d'un agent complexant spécifique permet de diminuer considérablement la lixiviation des molécules d'acide borique ou d'octaborate disodique tetrahydraté (ODT) et permet ainsi l'utilisation de ces agents de préservation du bois pour des applications à l'extérieur.

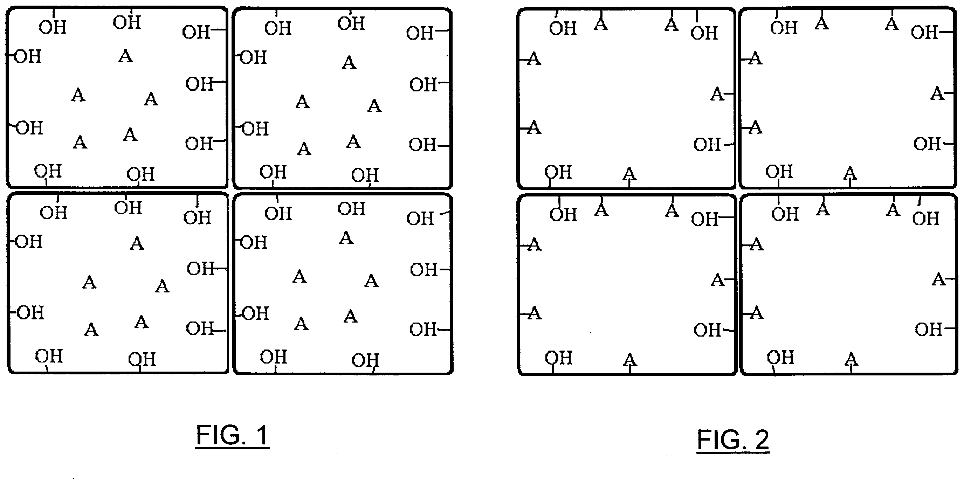

Les Figures 1 à 4 représentent une vue en coupe schématisée de quatre différentes cellules du bois dans lesquelles les fonctions hydroxys sont représentées par les "OH". Dans ces quatre figures, différentes conditions d'interaction de l'agent chélatant "A" qui se trouve inséré dans ses parois sont décrites.

La Figure 1 montre l'insertion de l'agent chélatant "A" dans les cellules du bois, l'agent chélatant étant susceptible d'interagir avec l'agent fongicide qui sera ajouté; cependant l'agent chélatant n'est pas lié aux parois de la cellule ni sur une matrice polymérique.

Dans la Figure 2, l'agent chélatant est sélectionné (ou modifié) afin qu'il possède une fonction lui permettant d'interagir avec les parois des cellules du bois. L'agent est donc fixé aux parois et permet de mieux retenir les agents fongiques ajoutés par la suite. Le taux de lixiviation est ainsi réduit de façon notable.

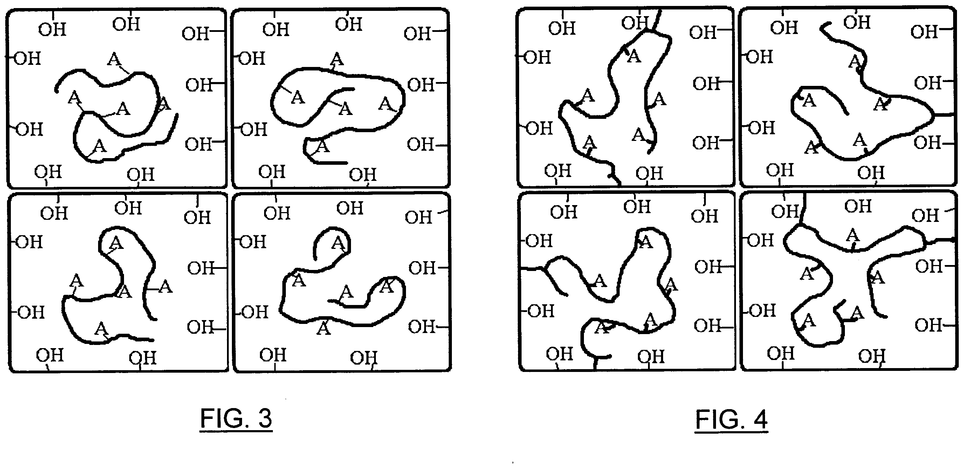

Dans la Figure 3, l'agent chélatant réagit avec une matrice polymérique que l'on insère dans les cellules du bois. Les différents réactifs sont insérés sous forme de monomères. Puis après imprégnation, on fait réagir différentes molécules afin de former la matrice polymérique à laquelle est fixé l'agent chélatant.

Dans la Figure 4, comme dans le cas de la Figure 3, l'agent chélatant est fixé sur la matrice polymérique. Cependant le choix des différents monomères est fait de manière à ce que certains d'entre eux possèdent des fonctions qui peuvent interagir avec les fonctions hydroxys présentes sur les parois des cellules.

De façon avantageuse, les propriétés du bois traité ont été améliorées par mise en oeuvre des procédés d'imprégnation de l'invention. Les exemples 1 à 4 illustrent deux variantes de l'invention, à savoir : d'une part dans les exemples 1 et 2, la fixation d'une molécule complexante directement sur les parois des cellules du bois et d'autre part, dans les exemples 3 et 4, la préparation d'une matrice polymère dans laquelle est incorporée la molécule complexante. Cette matrice est alors ensuite synthétisée "*in-situ*", dans les cellules du bois, à partir des monomères.

Les exemples 1 et 2 sont essentiellement les mêmes. Seul le choix de l'agent "complexant" est changé.

### Exemples 1 et 2 :

En résumé, nous tentons de générer une molécule ayant des propriétés complexantes afin de retenir le bore et ayant une fonction pouvant réagir avec les fonctions hydroxys présentent sur les cellules du bois. Dans le descriptif, les étapes 1 à 5 visent à atteindre cet objectif.

L'agent complexant est actuellement sélectionné afin de retenir les molécules de bore en générant des ponts hydrogènes entre ces deux molécules. Ces molécules (NMG ou THAM) possèdent également une molécule d'azote afin de retenir plus adéquatement la molécule "active" d'acide borique ou de borax. Ceci est nécessaire afin de retenir l'environnement complexant à des pH alcalins. Des détails concernant la structure que doivent posséder ces molécules sont décrits entre autres dans le document J. Chem. Soc., Faraday Trans., 1998, vol. 94, 683-689 à la p. 689 ou en rapport avec la résine Amberlite (marque de commerce) IRA743 qui est une résine styrénique avec une fonctionnalité méthyle glucamine :

R-CH₂-N(CH₃)-CH₂-CHOH-CHOH-CHOH-CHOH-CH₂-OH

avec R qui représente la matrice polymère et le groupe actif qui est essentiellement une base faible (amine tertiaire) avec une "une queue sucrée".

Une formule développée est présentée ci-après :

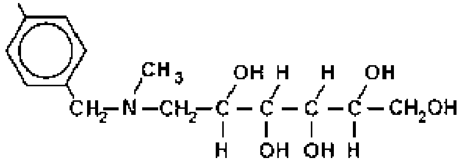

L'assimilation de bore comme borate [B(OH)₄]⁻ est un mécanisme compliqué, conduisant à la formation d'un complexe. Sans être lié à cette hypothèse, on pense que la représentation suivante est le résultat final :

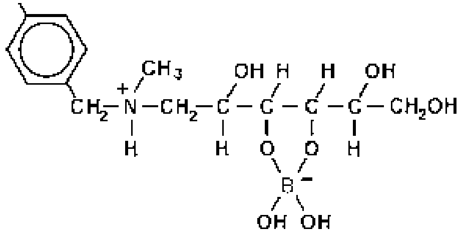

Le NMG (exemple 1) et le THAM (exemple 2) sont du nombre des molécules qui rencontrent ces critères. A ces molécules, nous ferons réagir une molécule d'épichlorohydrine. Le but est d'ajouter à la molécule "complexante" une fonction permettant de la greffer aux fonctions hydroxys présentent sur les parois des cellules du bois. Après avoir réagi, le chlorure de méthylène (CH₂Cl₂) est utilisé afin d'éliminer les traces de l'épicholorydrine ajoutée en excès. À la fin de ces étapes, nous obtenons la molécule souhaitée qui, d'une part, complexe de façon efficace les molécules de bore et, d'autre part, se greffe aux fonctions hydroxys du bois dans des conditions de pH adéquat (présence de NaOH). Un pH alcalin est nécessaire pour que la réaction de greffage ait lieu.

La molécule insérée est chauffée à 60°C afin de permettre la réaction avec les parois du bois. Les conditions optimales ne sont pas encore connues, mais nous savons que la réaction de fixation au bois a lieu en moins d'une heure. Cette étape permet également d'évaporer l'humidité du bois afin de permettre la seconde étape d'imprégnation.

La seconde étape d'imprégnation contient une solution aqueuse d'acide borique à pH neutre ou basique afin de permettre une complexation adéquate du bore.

### Exemple 1 : Greffage sur les parois des cellules du bois

### 1^{ère} étape

1. Dans 150 ml d'eau, 0,1 mol (19,5 g) de NMG est dissout.
2. On ajoute 0,12 mol (20 % excès) d'epichlorohydrine (11,1 g) ce qui permet de greffer le NMG sur les parois des cellules du bois.
3. Brassage durant une heure à température ambiante.
4. Extraction 2 fois avec 50 ml de CH₂Cl₂ afin d'éliminer l'excès d'épichlorohydrine, ceci permet d'éliminer l'épichlorohydrine, mais n'est pas indispensable pour la réussite de la synthèse.
5. La solution aqueuse contient la molécule suivante :

   ClCH₂CH(OH)CH₂N(CH₃)CH₂(CHOH)₅CH₂OH
6. Cette molécule est rapidement imprégnée dans le bois à pH=10 (NaOH).

Les étapes 1 à 5 peuvent être réalisées avec des variantes décrites dans le brevet de Grinstead portant le numéro US-A-4,755,298.

Le pH alcalin est apparu nécessaire afin de permettre la réaction de chlore avec les fonctions hydroxys présentes sur les parois du bois. Les échantillons de bois, de forme cubique sont constitués d'aubier de pin rouge dont le taux d'humidité est de 9-10 %.

Bois-OH + Cl-R + NaOH ---> NaCl + H₂O + Bois-O-R à 60°C.

7. Chauffage à 60°C pour réaction durant 24 heures (greffage de la molécule + élimination de l'eau).

### 2^{ième} étape

8. Imprégnation d'acide borique (0,5 M) sous vide (-65 cmHg) en pH alcalin (pH=9)

De cette façon, la complexation du bore sur les fonctions NMG est réalisée.

Le bois ainsi traité contient 2,0 % en poids de bore et 1,9 % en poids d'agent complexant par rapport au bois initialement pesé. Les mesures sur la résistance à la lixivation, réalisées selon la procédure E11-06 de l'AWPA modifié (5 faces protégées) ont donné une valeur de 37 % de perte en bore sur une période de 8 jours en présence de l'agent chélatant versus 67 % pour un échantillon traité en acide borique sans l'ajout d'agent chélatant.

### Exemple 2: Greffage sur les parois des cellules du bois

### 1^{ère} étape

1. Dans 125 ml d'eau 0,1 mol (12,1 g) de tris(hydroxyméthyl)méthylamine (THAM) est dissout.
2. On ajoute 0,12 mol (20 % excès) d'épichlorohydrin (11,1 g).
3. Brasser durant une heure à température ambiante
4. Extraire 2x avec 50 ml de CH₂Cl₂ afin d'éliminer l'excès d'épichlorohydrine.
5. La solution aqueuse contient la molécule suivante :

   ClCH₂CH(OH)CH₂NHC(CHOH)₃
6. Cette molécule sera rapidement imprégnée dans le bois à pH=10 (NaOH).
7. Chauffer à 60°C pour réaction, durant 24 heures (greffage de la molécule + NaCl).

### 2^{ième} étape

8. Imprégnation d'acide borique (0,5 M) sous vide (-65 cmHg) en pH alcalin (pH=9).

Les étapes 1 à 5 peuvent être réalisées avec des variantes décrites dans le brevet de Grinstead portant le numéro US-A-4,755,298.

Le bois ainsi traité contient 2,7 % en poids de bore et 3,3 % en poids d'agent complexant par rapport au poids de bois initialement pesé. Les mesures sur la résistance à la lixiviation, réalisées selon la procédure E11-06 de l'AWPA modifiée (5 faces protégées), ont donné une valeur de 23 % de perte en bore sur une période de 15 jours en présence d'agent chélatant versus 32 % pour un échantillon traité en acide borique sans l'ajout d'agent chélatant.

### Exemples 3, 3',4 et 4' :

Ces exemples portent plutôt sur l'insertion d'un polymère sur lequel la fonction chélatante est greffée.

L'exemple 3 résume les possibilités d'insérer un polymère contenant la fonction chélatante dans les cellules du bois. Dans ces cas, on utilise avantageusement un gel contenant la molécule chélatante, formé *in-situ* et inséré à l'intérieur des cellules poreuses du bois après avoir inséré préalablement une résine époxy et les atomes de bore.

Dans cet exemple, une matrice époxy est obtenue en faisant réagir une résine époxy (molécule contenant une structure réactive oxirane) avec un agent de cuisson (curing agent) à base d'amine, d'alcool, d'anhydrides, etc.

Afin d'obtenir un époxy optimal, il est important d'insérer des quantités équivalentes de fonctions oxiranes et de protons aminés. Dans le cas spécifique de l'exemple, une résine est sélectionnée, ainsi qu'un agent de cuisson commercial et soluble à l'eau auxquels sera ajoutée une quantité adéquate de NMG.

Par sa fonction amine, le NMG présente l'aptitude de réagir à la résine de façon similaire aux molécules de l'agent de cuisson. Un réseau tridimensionnel est généré par l'époxy commercial où certains sites seront occupés par la molécule active de NMG. La quantité "efficace" de NMG à ajouter à la solution est avantageusement optimisée.

Plus spécifiquement, dans cet exemple, une première solution de résine et d'acide borique est préparée et imprégnée dans le bois. Après imprégnation sous vide, on chauffe à 60°C afin d'éliminer l'excé dent d'eau.

Cette solution sera par la suite imprégnée dans le bois. Le chauffage subséquent à 60°C permettra l'amorce d'une réticula tion qui devrait se poursuivre et se compléter dans les jours qui suivent.

Détail de l'exemple 3 de complexation du bore sur une matrice polymère insérée dans les cellules du bois :
1. Dans 100 ml d'eau, on ajoute 210 g de poly(éthylèneglycol) diglycidyl éther (Mw = 526) et 12,4 g d'acide borique. L'échantillon est légèrement chauffé afin de faciliter la dissolution de l'acide borique.
2. Cette solution est par la suite imprégnée dans un échantillon cubique de bois (19 mm x 19 mm x 19 mm) sous vide puis séché à 60°C durant une nuit afin d'éliminer l'excédent d'humidité.
3. Dans 100 ml d'eau, on dilue 78 grammes de NMG.
4. Imprégnation dans le bois sous vide.
5. Chauffage 24 heures à 60°C.
6. Réaction du NMG avec la résine époxy (greffage).

La résine époxy réagit avec la fonction amine et hydroxy du NMG afin de former un réseau à base d'époxy possédant des fonctions complexantes du bore.

Détail de l'exemple 3' de complexation du bore sur une matrice polymère insérée dans les cellules du bois. L'insertion se fait en une seule étape :
1. 7 g de H₃BO₃ (acide borique) est dissout dans 100 ml d'eau.
2. On y ajoute 31,6 g de NMG (N-Méthyl d-Glucamine).
3. Après solubilisation, on ajoute 5 grammes d'EDA (éthylène diamine)
4. Après dissolution, 130 grammes de PEGDGE (polyethylene glycol (400) diglycidyl éther) est ajouté, puis mélangé.
5. Imprégnation sans délai dans le bois sous vide (-65 cmHg).
6. Chauffage 24 heures à 60°C.

La résine époxy réagit avec la fonction amine et hydroxy du NMG et les fonctions amines de l'EDA afin de former un réseau à base d'époxy possédant des fonctions complexantes du bore *in-situ* dans la matrice à base de polysaccharide.

L'exemple 4 se trouve être un second exemple de ce type d'approche.

En bref, on vise dans un premier temps à greffer une fonction réticulable sur la molécule de NMG. Le glycidyl méthacrylate (GM) réagit à haute température (70°C) afin de se greffer au NMG et ainsi former du GMHP (3-(N-glucidol-N-methyl)-2-hydroxypropyl méthacrylate).

Après avoir obtenu cette molécule, cette solution est diluée dans l'eau et elle sera ajoutée à un initiateur thermique (Na₂S₂O₈) et à un monomère avec deux fonctions acrylates (PEG400) diacrylate afin de créer un réseau réticulable.

Après avoir inséré dans le bois ces solutions et après que ces dernières aient formé un polymère réticulé dans les cellules du bois, le bois est imprégné de nouveau avec une solution aqueuse d'acide borique (2 % en poids d'acide borique dans l'eau) qui complexe le NMG.

Détails de l'exemple 4 - Complexation du bore sur une matrice polymère insérée dans les cellules du bois :
1. Dans 30 ml de 2-méthyl pyrolidone on ajoute 9,75 g (50 mmol) de N-méthyl-D-glucamine et 7,5 ml (55 mmol) de glycidyl méthacrylate. Lors de cette synthèse on utilise le n-méthyl pyrolidone comme solvant car le glycidyl méthacrylate (GM) n'est pas soluble dans l'eau. Le GM permet d'ajouter une fonction méthacrylate qui réagira avec l'amorceur thermique afin de former le polymère avec la fonction NMG.
2. La solution est mélangée sous atmosphère d'azote à 70°C durant 6 heures.
3. On laisse refroidir.
4. Dans 30 ml d'eau on ajoute 0,5 g de Na₂S₂O₈ et 1,01 g de PEG 400 diacrylate. Le persulfate de sodium joue le rôle d'amorceur thermique. Il permet la réaction de la fonction méthacrylate sur la molécule synthétisée et, ainsi, la polymérisation.
5. On ajoute les deux solutions puis on imprègne dans le bois (réticulation très rapide : 2 minutes).
6. On prépare une solution de 2 % en poids d'acide borique dans l'eau puis l'on tamponne à un pH de 10,3 à l'aide d'une solution de NaOH concentré. On laisse tremper durant 3 heures sous vide partiel (-65 cm de Hg).

Le bois ainsi traité contient 2,3 % en poids de bore et 14,6 % en poids d'agent complexant par rapport au poids de bois initialement pesé. Les mesures sur la résistance à la lixiviation, réalisées selon la procédure E11-06 de l'AWPA modifiée (5 faces protégées) ont données une valeur de 46 % de perte en bore sur une période de 8 jours en présence de l'agent chélatant versus 67 % pour un échantillon traité en acide borique sans l'ajout d'agent chélatant.

D'autres variantes des étapes 1 et 2 du procédé peuvent être réalisées en s'inspirant de la publication de Bizak et al. (Macromol. Chem. Phys. 201, 2000, 577-584).

L'exemple 4' se trouve être un second exemple de ce type d'approche. Le traitement du bois se fera cependant en une seule étape.

Il est possible d'obtenir des résultats similaires à l'aide de gels polymériques obtenus à l'aide d'un monomère ayant une fonction acrylate. La préparation de cette matrice est obtenue par la méthode proposée par Bizak et al. Le monomère est obtenu en faisant réagir du glycidyl méthacrylate (GM) avec du n-méthyl glucamine (NMG) dans un ratio molaire (11:10) où le GM est légèrement en excès. La réaction, afin de préparer le monomère, a lieu dans une solution de NMP (N-méthyl pyrrolidone) chauffée à 70°C durant 7 heures (où jusqu'à ce que la solution soit soluble dans l'eau). Le 3-(N-glucidol-N-méthyl)-2-hydroxypropyl méthacrylate (GMHP) est ainsi obtenu. Le solvant (dans ce cas, le NMP) peut être éliminé ou non selon l'application désirée. Le GMHP est un monomère pouvant réticuler en présence, notamment, d'un initiateur radicalaire (thermique ou photonique) ou par la présence d'un faisceau d'électron (e-beam).

Après avoir obtenu cette molécule, cette solution est diluée dans l'eau et elle sera ajoutée à un initiateur thermique (par exemple, le VA-060 : 2,2'-Azobis[2-[1-(2-hydroxyéthyl)-2-imidazolin-2-yl]propane] Dihydrochloride Monohydrate de Wako Chemicals USA) afin de créer un réseau réticulable. À cette formulation de base, d'autres monomères à une ou plusieurs fonctions acrylates peuvent être ajoutés afin de modifier les propriétés du gel formé.

Solution :
- 0,625 g de H₃BO₃;
- 25 ml d'une solution de GMHP (tel que la préparation est décrite ci-bas); et
- 0,625 g de VA-060
- dans 25 ml d'H₂O.

La solution est insérée dans la matrice à base de polysaccharides à l'aide d'une imprégnation dans des cubes d'aubier de pin rouge (19 mm x 19 mm x 19 mm). L'imprégnation de la solution se fait sous vide (-65 cmHg) durant 30 minutes. La réticulation se fait par chauffage à 75°C durant un e nuit sous atmosphère inerte. À noter, l'utilisation d'un gaz inerte n'est pas nécessaire pour des échantillons de grande taille.

Il s'agit d'une étape de traitement du bois en une seule étape d'imprégnation suivie d'une étape de réticulation. Dans cet exemple, un amorceur thermique est utilisé à titre d'exemple, mais il est possible d'utiliser d'autres techniques connues dans la littérature et utilisées afin de réticuler le polymère en faisant réagir une fonction acrylate.

Détails de l'exemple 4' - Complexation du bore sur une matrice polymère insérée dans les cellules du bois :
1. Dans 25 ml de N-méthyl pyrrolidone on ajoute 8,125 g (50 mmol) de N-methyl-D-glucamine et 6,25 ml (55 mmol) de glycidyl méthacrylate. Lors de cette synthèse on utilise le n-méthyl pyrolidone comme solvant car le glycidyl méthacrylate (GM) n'est pas soluble dans l'eau. Le GM permet d'ajouter une fonction méthacrylate qui réagira avec l'amorceur thermique afin de former le polymère avec la fonction NMG.
2. La solution est mélangée sous atmosphère d'azote à 70°C durant 6 heures.
3. On laisse refroidir dans 25 ml d'eau, on ajoute 0,625 g de VA-060. Le VA-060 joue le rôle d'amorceur thermique. Il permet la réaction de la fonction méthacrylate sur la molécule synthétisée et, ainsi, la polymérisation. À cette solution est ajouté, puis mélangé 0,625 g d'acide borique.
4. On mélange 25 ml des deux solutions préparés puis on imprègne en une seule étape dans des cubes de bois de 19 mm x 19 mm x 19 mm constitué d'aubier de pin rouge à l'aide d'un vide partiel (-65 cmHg).
5. Le bois imprégné de solution est chauffé à 75°C durant une nuit sous atmosphère inerte (balayage d'azote) afin de permettre la réticulation de la matrice polymérique dans les cellules du bois.

Le bois ainsi traité contient 1,3 % en poids de bore et 22 % en poids d'agent complexant (GMHP) par rapport au poids de bois initialement pesé. Les mesures sur la résistance à la lixiviation, réalisées selon la procédure E11-06 de l'AWPA ont donnée une valeur de 45 % de perte en bore sur une période de 14 jours en présence de l'agent chélatant versus 100 % pour un échantillon traité en acide borique en présence d'agent chélatant non-réticulé (perte atteinte après moins de 3 jours pour ce dernier cas). Un résumé du comportement est présenté dans la Figure 5.

L'exemple est présenté à titre indicatif et ne limite pas le choix des composantes. À titre d'exemple, la solution d'imprégnation peut également contenir au moins un des éléments suivants :
- un agent d'imprégnation (afin de faciliter l'imprégnation de la solution dans les cellules du bois);
- un inhibiteur de radicaux libre (afin de stabiliser la solution de traitement);
- un stabilisateur UV (afin de prolonger la vie utile du polymère préparé);
- un antioxydant;
- un "oxygen scavenger";
- un colorant;
- un amorceur ionique; et
- tout autre additif normalement utilisé dans les formulations de matrices polymériques.

D'autres variantes des étapes 1 et 2 du procédé peuvent être réalisées en s'inspirant de la publication de Bizak et al. (Macromol. Chem. Phys. 201, 2000, 577-584).

### Exemples 5 et 5' - test comparatif

### Exemple 5 - Imprégnation :

Préparation d'une solution d'imprégnation qui contient le composé de formule ClCH₂CH(OH)CH₂NHC(CHOH)₃ par :
- dissolution de 0,1 mole (12,112 g) de THAM dans 125 ml d'eau,
- ajout de 0,12 mol (excès de 20 %) d'épichlorohydrine (11,1 g),
- agitation de la solution ainsi obtenue, pendant une heure, à température ambiante; et
- extraction de la solution obtenue dans l'étape précédente par agitation à l'aide d'un volume 50 ml de CH₂Cl₂ afin d'éliminer l'excès d'épichlorohydrine n'ayant pas réagi.

Imprégnation d'un cube de bois (19 mm x 19 mm x 19 mm) par la solution d'imprégnation obtenue dans l'étape précédente en ajustant le pH de 10. Le pH est ajusté par ajout de la quantité requise (0,8 ml) de NaOH (50 %); à ces concentrations, 3,17 mmol de l'agent complexant aura été fixé sur les parois du bois.

Chauffage des blocs à 60°C pendant 18 heures (pour de petits blocs le temps de séchage est augmenté afin d'accélérer le traitement de fixation et d'élimination de l'eau afin de faciliter la seconde imprégnation).

Puis, imprégnation de la matière à base de polysaccharides ainsi modifiée par une solution aqueuse d'acide borique afin d'insérer 1,31 mmol en solution (2 % massique d'acide borique), donc le pH est passé de 4,68 à 10 par l'ajout de 4,58 ml de NaOH (50 %); l'insertion dans les échantillons de bois se fait avantageusement sous vide partiel, plus préférentiellement à un vide partiel de -65 cmHg.

### Exemple 5' - Imprégnation :

Préparation d'une solution d'imprégnation qui contient le GMHP tel que décrit à l'exemple 4' :
1. Dans 25 ml de 2-méthyl pyrolidone on ajoute 8,125 g (50 mmol) de N-methyl-D-glucamine et 6,25 ml (55 mmol) de glycidyl méthacrylate. Lors de cette synthèse on utilise le n-méthyl pyrolidone comme solvant car le glycidyl méthacrylate (GM) n'est pas soluble dans l'eau. Le GM permet d'ajouter une fonction méthacrylate qui réagira avec l'amorceur thermique afin de former le polymère avec la fonction NMG.
2. La solution est mélangée sous atmosphère d'azote à 70°C durant 7 heures.
3. On laisse refroidir.
4. Dans 25 ml d'eau on ajoute 0,625 g de VA-060. Le VA-060 joue le rôle d'amorceur thermique. Il permet la réaction de la fonction méthacrylate sur la molécule synthétisée et, ainsi, la polymérisation.
5. À cette solution est ajouté, puis mélangé 0,625 g d'acide borique :
   - imprégnation d'un cube de bois (19 mm x 19 mm x 19 mm) par la solution d'imprégnation; l'insertion dans les échantillons de bois se fait avantageusement sous vide partiel, plus préférentiellement à un vide partiel de -65 cmHg; et
   - chauffage des blocs à 75°C pendant 18 heures sous atmosphère d'azote afin de sécher les blocs et de permettre leur réticulation.

### Technique d'analyse du taux de bore lixivié - exemples 5 et 5' :

Cette technique se base sur le protocole de l'AWPA E11-06. Les blocs sont trempés dans de l'eau déminéralisée à température ambiante. Des échantillons d'eau sont prélevés régulièrement et une analyse par spectrométrie ICP est effectuée (après dilution de la solution par un facteur de 250) afin d'évaluer le taux de bore présent dans la solution. Les résultats sont représentés aux Figures 5 et 5'.

Nous comparons ces résultats avec des échantillons similaires mais dont l'agent chélatant n'a pas été réticulé. Ces échantillons témoin n'ont subi que les étapes d'imprégnations du bore en présence de l'agent chélatant non réticulé en utilisant la même solution.

Sur la Figure 5, les échantillons de l'exemple 5 (ronds) ont été préparés selon le protocole d'imprégnation de l'invention tel que décrit dans la procédure de l'exemple 2.

Il s'agit donc d'un échantillon de bois en présence de bore et en présence d'un agent chélatant à base de THAM fixé par modification chimique du bois. D'autre part, les échantillons de référence (carrés vides) ont été préparés en suivant le même protocole, mais en éliminant l'étape de réticulation. Il s'agit donc d'un échantillon de bois en présence de bore et d'agent chélatant (échantillon témoin).

Sur la Figure 5', les échantillons de l'exemple 5' (ronds) ont été préparés selon le protocole d'imprégnation de l'invention tel que décrit dans la procédure de l'exemple 4'. Il s'agit donc d'un échantillon de bois en présence de bore et en présence d'un agent chélatant à base de NMG. D'autre part, les échantillons de référence (carrés vide) ont été préparés en suivant le même protocole, mais en éliminant l'étape de réticulation. Il s'agit donc d'un échantillon de bois en présence de bore et d'agent chélatant non réticulé (échantillon témoin).

La comparaison rapportée dans la Figure 5' permet de faire sortir une diminution du taux de lixiviation du bore de 45 % après 14 jours de trempage sans utiliser une protection de cinq surfaces des échantillons préparés.

### Exemple 6 - Analyse du taux de rétention du bore

Des tests afin d'évaluer la résistance à la dégradation du bois selon différents traitement ont été effectués en suivant le protocole E10-06 de l'AWPA. Ces tests ont été effectués à l'aide de deux pourritures brune: le *postia placenta* et le *gleophyllum trabeum.*

Afin de situer correctement le traitement de la présente invention, par rapport au traitement actuellement utilisé dans l'industrie, des tests ont également été effectués pour des échantillons de bois traité avec le CCA ou le Cu-Azole. Le traitement descriptif de cette invention et utilisé afin de protéger le bois contre les attaques fongiques est similaire à celui de l'exemple 3.

Le gel est formé par la préparation d'un époxy. À titre comparatif, deux préparations ont été faites. L'une avec de l'acide borique comme agent fongique (préparation 1), l'autre avec l'octaborate disodique tetrahydraté (ODT) (préparation 2).

Préparation 1 : 7 g de H₃BO₃ (acide borique) sont dissouts dans 100 ml d'eau; on y ajoute 31,6 g de NMG (N-Méthyl d-Glucamine) après solubilisation; on ajoute 5 grammes d'EDA (éthylène diamine); après dissolution, 130 g de PEGDGE (polyéthylène glycol (400) diglycidyl éther) est ajouté, puis mélangé.

Cette solution est immédiatement utilisée pour imprégnation dans le bois.

Préparation 2 : 7 g d'octaborate disodique tetrahydraté (ODT) sont dissouts dans 100 ml d'eau; on y ajoute 31,6 g de NMG (N-Méthyl d-Glucamine); après solubilisation, on ajoute 5 g d'EDA (éthylène diamine); après dissolution, 130 g de PEGDGE (polyéthylène glycol (400) diglycidyl éther) est ajouté, puis mélangé.

Cette solution est immédiatement utilisée pour imprégnation dans le bois. À noter, l'ordre pour l'ajout des constituants peut être ajusté en fonction de la technique de préparation. Il ne s'agit que d'une des techniques possibles.

Ces deux préparations seront utilisées afin de traiter des blocs de 19 mm x 19 mm x 19 mm d'aubier de pin rouge à l'aide d'un vide partiel de -65 cmHg maintenu durant 30 minutes. Ce type de solution forme un gel dans les cellules du bois après un délai d'une heure. Afin d'accélérer le processus de réticulation et de permettre le séchage, les blocs sont chauffés durant une nuit à 60°C.

Afin de valider la capacité de notre traitement à retenir le bore dans le bois et à jouer son rôle d'agent de préservation du bois, les blocs traités ont été trempés durant une semaine dans de l'eau déminéralisée afin d'extraire toute trace d'acide borique ou d'ODT non chélaté.

Les blocs, après séchage, ont été soumis au test de culture sur sol en laboratoire en suivant rigoureusement le protocole E10-06 de l'AWPA.

La Figure 6 résume la perte de poids (en pourcentage) après 20 semaines d'exposition aux champignons de dégradation des blocs traités à l'aide de différents agents de préservation (CCA 2%, Cu-Azole 1,04%_{Cu}, acide borique 9 kg/m³, acide borique 15 kg/m³ avec l'agent chélatant (préparation 1) et borax 12 kg/m³ avec l'agent chélatant (préparation 2) obtenu selon la méthode décrite dans cet exemple. Les teneurs en acide borique et en ODT ont été ajustées afin qu'il demeure 8 kg/m³ de ces agents après le traitement de lessivage.

Les résultats obtenus après 20 semaines de test montre une perte importante pour les échantillons non traité et pour l'échantillon traité avec de l'acide borique sans agent chélatant ayant été lessivé. Les résultats obtenus pour ces configurations sont très semblables quant à la dégradation subite et ils démontrent que l'acide borique lors d'un lessivage n'est pas retenu dans le bois et ne joue donc pas son rôle afin de préserver le bois dans ces conditions.

Tel qu'attendu, les échantillons traités avec du CCA ou du cuivre-azole conservent leur intégrité et une très faible fraction de bois est perdu (pertes inférieures à 2 % dans tous les cas). Un résultat très similaire est obtenu pour l'échantillon décrit dans cette invention. Après un lessivage important des échantillons traités, une fraction importante du bore est retenue (60-70 % du bore inséré initialement après analyse par spectrométrie ICP). Ceci indique clairement que l'agent chélatant joue son rôle afin de retenir l'acide borique. Les valeurs obtenues sont présentées au Tableau 1 (résultats des pertes de poids des blocs de bois suite à un test de culture suivant le protocole AWPA E10-06). Les échantillons présentés sur ce tableau ont subi un lessivage d'une semaine avant le test E10-06.

**Tableau 1**

| ***Agent de préservation*** | ***Perte de poids (%) postia placenta*** | ***Perte de poids (%) gleophyllum trabeum*** |
|---|---|---|
| sans agent | 67,9 | 71 |
| CCA 2% | 1,6 | 0,2 |
| Cu-Azole 1 % | 0,49 | 0,06 |
| acide borique | 67,5 | 67,5 |
| acide borique + Epoxy NMG | 0,12 | 0,33 |
| Tim-Bor (ODT) + Epoxy NMG | 1,31 | 0,86 |

Les analyses de dégradation des blocs traités à l'aide de ces deux solutions démontrent une résistance équivalente des agents mis en oeuvre dans cette invention aux produits commerciaux (CCA et Cu-Azole) afin de protéger le bois face aux attaques des pourritures brunes. Nous pouvons ainsi conclure que, même si l'agent chélatant permet une rétention importante de composés à base de bore, ces derniers demeurent actifs afin de protéger le bois contre l'attaque de pourritures du bois.

En conclusion, les tests réalisés mettent en évidence que les matières solides de l'invention, à base de polysaccharides, et qui comportent un agent complexant et/ou une matrice polymérique spécifique, en plus de l'agent de préservation présentent une durée de vie qui peut être supérieure pour au moins 50 % à la durée de vie de la même matière qui ne contiendrait que l'agent de préservation.

Bien que la présente invention ait été décrite à l'aide de mises en oeuvre spécifiques, il est entendu que plusieurs variations et modifications peuvent se greffer aux dites mises en oeuvre, et la présente invention vise à couvrir de telles modifications, usages ou adaptations de la présente invention suivant en général les principes de l'invention et incluant toute variation de la présente description qui deviendra connue ou conventionnelle dans le champ d'activité dans lequel se retrouve la présente invention, et qui peut s'appliquer aux éléments mentionnés ci-haut. l'exemple 4'. Il s'agit donc d'un échantillon de bois en présence de bore et en présence d'un agent chélatant à base de NMG. D'autre part, les échantillons de référence (carrés vide) ont été préparés en suivant le même protocole, mais en éliminant l'étape de réticulation. Il s'agit donc d'un échantillon de bois en présence de bore et d'agent chélatant non réticulé (échantillon témoin).

La comparaison rapportée dans la Figure 5' permet de faire sortir une diminution du taux de lixiviation du bore de 45 % après 14 jours de trempage sans utiliser une protection de cinq surfaces des échantillons préparés.

### Exemple 6 - Analyse du taux de rétention du bore

Des tests afin d'évaluer la résistance à la dégradation du bois selon différents traitement ont été effectués en suivant le protocole E10-06 de l'AWPA. Ces tests ont été effectués à l'aide de deux pourritures brune: le *postia placenta* et le *gleophyllum trabeum.*

Afin de situer correctement le traitement de la présente invention, par rapport au traitement actuellement utilisé dans l'industrie, des tests ont également été effectués pour des échantillons de bois traité avec le CCA ou le Cu-Azole. Le traitement descriptif de cette invention et utilisé afin de protéger le bois contre les attaques fongiques est similaire à celui de l'exemple 3.

Le gel est formé par la préparation d'un époxy. À titre comparatif, deux préparations ont été faites. L'une avec de l'acide borique comme agent fongique (préparation 1), l'autre avec l'octaborate disodique tetrahydraté (ODT) (préparation 2).

Préparation 1 : 7 g de H₃BO₃ (acide borique) sont dissouts dans 100 ml d'eau; on y ajoute 31,6 g de NMG (N-Méthyl d-Glucamine) après solubilisation; on ajoute 5 grammes d'EDA (éthylène diamine); après dissolution, 130 g de PEGDGE (polyéthylène glycol (400) diglycidyl éther) est ajouté, puis mélangé.

Cette solution est immédiatement utilisée pour imprégnation dans le bois.

Préparation 2 : 7 g d'octaborate disodique tetrahydraté (ODT) sont dissouts dans 100 ml d'eau; on y ajoute 31,6 g de NMG (N-Meéhyl d-Glucamine); après solubilisation, on ajoute 5 g d'EDA (éthylène diamine); après dissolution, 130 g de PEGDGE (polyéthylène glycol (400) diglycidyl éther) est ajouté, puis mélangé.

Cette solution est immédiatement utilisée pour imprégnation dans le bois. À noter, l'ordre pour l'ajout des constituants peut être ajusté en fonction de la technique de préparation. Il ne s'agit que d'une des techniques possibles.

Ces deux préparations seront utilisées afin de traiter des blocs de 19 mm x 19 mm x 19 mm d'aubier de pin rouge à l'aide d'un vide partiel de -65 cmHg maintenu durant 30 minutes. Ce type de solution forme un gel dans les cellules du bois après un délai d'une heure. Afin d'accélérer le processus de réticulation et de permettre le séchage, les blocs sont chauffés durant une nuit à 60°C.

Afin de valider la capacité de notre traitement à retenir le bore dans le bois et à jouer son rôle d'agent de préservation du bois, les blocs traités ont été trempés durant une semaine dans de l'eau déminéralisée afin d'extraire toute trace d'acide borique ou d'ODT non chélaté.

Les blocs, après séchage, ont été soumis au test de culture "soil-block" en laboratoire en suivant rigoureusement le protocole E10-06 de l'AWPA.

La Figure 6 résume la perte de poids (en pourcentage) après 20 semaines d'exposition aux champignons de dégradation des blocs traités à l'aide de différents agents de préservation (CCA 2%, Cu-Azole 1,04%_{Cu}, acide borique 9 kg/m³, acide borique 15 kg/m³ avec l'agent chélatant (préparation 1) et borax 12 kg/m³ avec l'agent chélatant (préparation 2) obtenu selon la méthode décrite dans cet exemple. Les teneurs en acide borique et en ODT ont été ajustées afin qu'il demeure 8 kg/m³ de ces agents après le traitement de lessivage.

Les résultats obtenus après 20 semaines de test montre une perte importante pour les échantillons non traité et pour l'échantillon traité avec de l'acide borique sans agent chélatant ayant été lessivé. Les résultats obtenus pour ces configurations sont très semblables quant à la dégradation subite et ils démontrent que l'acide borique lors d'un lessivage n'est pas retenu dans le bois et ne joue donc pas son rôle afin de préserver le bois dans ces conditions.

Tel qu'attendu, les échantillons traités avec du CCA ou du cuivre-azole conservent leur intégrité et une très faible fraction de bois est perdu (pertes inférieures à 2 % dans tous les cas). Un résultat très similaire est obtenu pour l'échantillon décrit dans cette invention. Après un lessivage important des échantillons traités, une fraction importante du bore est retenue (60-70 % du bore inséré initialement après analyse par spectrométrie ICP). Ceci indique clairement que l'agent chélatant joue son rôle afin de retenir l'acide borique. Les valeurs obtenues sont présentées au Tableau 1 (résultats des pertes de poids des blocs de bois suite à un test de culture suivant le protocole AWPA E10-06). Les échantillons présentés sur ce tableau ont subi un lessivage d'une semaine avant le test E10-06.

**Tableau 1**

| ***Agent de préservation*** | ***Perte de poids (%) postia placenta*** | ***Perte de poids (%) gleophyllum trabeum*** |
|---|---|---|
| sans agent | 67,9 | 71 |
| CCA 2% | 1,6 | 0,2 |
| Cu-Azole 1% | 0,49 | 0,06 |
| acide borique | 67,5 | 67,5 |
| acide borique + Epoxy NMG | 0,12 | 0,33 |
| Tim-Bor (ODT) + Epoxy NMG | 1,31 | 0,86 |

Les analyses de dégradation des blocs traités à l'aide de ces deux solutions démontrent une résistance équivalente des agents mis en oeuvre dans cette invention aux produits commerciaux (CCA et Cu-Azole) afin de protéger le bois face aux attaques des pourritures brunes. Nous pouvons ainsi conclure que, même si l'agent chélatant permet une rétention importante de composés à base de bore, ces derniers demeurent actifs afin de protéger le bois contre l'attaque de pourritures du bois.

En conclusion, les tests réalisés mettent en évidence que les matières solides de l'invention, à base de polysaccharides, et qui comportent un agent complexant et/ou une matrice polymérique spécifique, en plus de l'agent de préservation présentent une durée de vie qui peut être supérieure pour au moins 50 % à la durée de vie de la même matière qui ne contiendrait que l'agent de préservation.

## Revendications

1. Matière solide à base de polysaccharides comprenant
- au moins un agent actif choisi parmi les agents bactéricides, les agents fongicides, les agents insecticides et les agents retardateurs de combustion, ledit agent actif étant constitué par plus de 50% en poids d'au moins un composé choisi dans le groupe constitué par le bore, les dérivés du bore, la silice, les dérivés de la silice, l'aluminium, les dérivés de l'aluminium, les dérivés aluminosilicates, le phosphore, les dérivés du phosphore, l'iode, les dérivés de l'iode et leurs mélanges,
- au moins un agent complexant au moins partiellement l'agent actif, et
- une matrice polymérique formant éventuellement des liaisons avec des fonctions des polysaccharides ;
ledit matériau étant **caractérisé en ce que** l'agent complexant est chimiquement lié à des fonctions de la matrice polymère.

2. Matière selon la revendication 1, **caractérisée en ce que** l'agent complexant est au moins partiellement lié audit agent actif, ou chimiquement lié à des fonctions des polysaccharides.

3. Matière selon la revendication 1, **caractérisée en ce que** l'agent actif comprend en outre moins de 40% d'un composé choisi dans le groupe constitué par l'acide de chromate de cuivre, l'arséniate de cuivre ammoniacal, l'arséniate de cuivre, zinc ammoniacal, les composés d'arséniate de cuivre chromaté (CCA type A, B et/ou C), le chlorure de zinc chromaté, les composés à base d'alkyl d'ammonium contenant principalement du chlorure de dodécyldiméthyl ammonium, les cuivre ammoniacal quaternaire ACQ de type A, B, C et/ou D), le bis (diméthyldithiocarbamate) de cuivre, le citrate de cuivre ammoniacal, le cuivre-azole (CA) de type A (CBA-A), le cuivre-azole de type B (CA-B), le Cuivre HDO de type A (CX-A) dans lequel HDO est le Bis-(N-cyclohehyldiazeniumdioxy), et leurs mélanges.

4. Matière selon la revendication 1, **caractérisée en ce que** la quantité totale de composé actif et d'agent complexant et de matrice polymérique représente de 1 à 30 % en poids de ladite matière à base de polysaccharides.

5. Matière selon la revendication 1, **caractérisée en ce que** la matrice polymère est choisie dans le groupe constitué par les résines époxy, les polyéthers, les polyvinyl alcools, les polyuréthanes, les nylons et les mélanges d'au moins deux d'entre eux.

6. Matière selon la revendication 5, **caractérisée en ce que** la matrice polymère est une résine époxy obtenue par réticulation *in-situ* d'un polyéthylène glycol diglycidyl éther en présence de fonctions amine et/ou hydroxy et en présence d'au moins un agent chélatant contenant une amine primaire ou secondaire, la matrice polymérique à laquelle est greffée l'agent complexant ayant une taille inférieure à celle des cavités présentes dans la matière à base de polysacharides.

7. Matière selon la revendication 5, **caractérisée en ce que** la matrice polymère est un polymère de N-glucidol-N-methyl)-2-hydroxypropyl méthacrylate.

8. Matière selon la revendication 1, **caractérisée en ce qu'**elle comprend au moins 50% en poids de polysaccharides.

9. Matière selon la revendication 1, **caractérisée en ce que** les polysaccharides sont choisis dans le groupe constitué par les hémicelluloses, les celluloses, les celluloses modifiées chimiquement et/ou physiquement, les amidons naturels, les amidons modifiés chimiquement et/ou physiquement, et les mélanges d'au moins deux d'entre eux.

10. Procédé d'imprégnation d'une matière à base de polysaccharides, ayant une teneur en matière sèche supérieure à 20 % et qui comporte des cavités, comprenant au moins les étapes suivantes :
- abaissement du taux d'humidité relative de la matière à base de polysaccharides à une valeur comprise entre 15 et 35 %;
- insertion, dans les cellules de la matière à base de polysaccharides, d'une matrice polymère dans laquelle est incorporée une molécule complexante du bore et/ou de la silice et/ou de l'aluminium et/ou du phosphore;
- imprégnation de la matière à base de polysaccharides modifiée obtenue dans l'étape précédente à l'aide d'une solution à base de bore et/ou de silice et/ou d'aluminium et/ou de phosphore.

11. Procédé de traitement d'une matière à base de polysaccharides comprenant les étapes de :
a) imprégnation de ladite matière à l'aide d'une solution d'imprégnation obtenue par :
- dissolution dans une solution aqueuse, d'une quantité de tris(hydroxyméthyl)méthylamine (THAM) et/ou de NMG comprise entre 0,05 M et 5 M ;
- ajout d'un excès d'épichlorohydrine dans la solution préparée dans l'étape précédente ;
- agitation de la solution obtenue dans l'étape précédente ; et
- extraction de l'excès d'épichlorohydrine à l'aide d'un solvant organique, à un pH compris entre 8 et 13 ;
b) chauffage de la matière imprégnée à une température comprise entre 40 et 105°C, pendant une durée comprise entre 15 minutes et 24 heures, et
c) imprégnation de la matière chauffée obtenue dans l'étape précédente à l'aide d'une solution d'un composé choisi dans le groupe constitué par l'acide borique, l'octoborate de sodium tetrahydraté (ODT), l'acide phosphoreux, le phosphate d'ammonium, le phosphate de sodium et les mélanges d'au moins 2 de ces derniers, ladite solution ayant une concentration permettant d'obtenir un ratio molaire entre l'agent complexant et la molécule de bore variant entre 0,1 et 2,0.

12. Procédé selon la revendication 11, dans lequel les étapes a) et c) sont réalisées simultanément et elles sont suivies par l'étape b).

13. Procédé d'imprégnation d'une matière à base de polysaccharides comprennent les étapes de :
a') préparation d'une solution d'imprégnation qui contient le composé de formule ClCH₂CH(OH)CH₂NHC(CHOH)₃, par dissolution de 0,05 à 0,50 mol, de THAM dans 50 à 500 ml d'eau ; ajout de 0,06 à 0,60 mol, d'épichlorohydrine, et agitation de la solution obtenue ;
b') imprégnation de la matière à base de polysaccharides par la solution d'imprégnation obtenue à un pH compris entre 7 et 13 ;
c') chauffage entre 50 et 70°C pendant une durée de 0,5 à 24 heures ; et
d') imprégnation de la matière à base de polysaccharides ainsi modifiée par une solution aqueuse d'acide borique d'environ 0,33 M (2 % massique) dont le pH est passé de 4,68 à 10 par l'ajout de 4,58 ml de NaOH (50 %).

14. Procédé selon la revendication 13, dans lequel les étapes b') et d') sont réalisées simultanément et elles sont suivies par l'étape c').

15. Procédé selon la revendication 10, **caractérisé en ce que** la molécule complexante porte des fonctions hydroxy, amine et/ou acide carboxylique.

16. Procédé selon la revendication 10, **caractérisée en ce que** l'agent actif comprend du bore ou un dérivé du bore, et l'agent complexant du bore est choisi :
- dans le groupe constitué par le N-methyl-D-glucamine (NMG), le tris(hydroxymethyl)aminomethane (THAM), le 1,3-bis[tris(hydroxymethyl) methylamino]propane, l'(hydroxyéthyl)amine, la di(hydroxyethyl)amine, les acides iminodicarboxyliques, l'acide imino diacétique et les mélanges d'au moins deux d'entre eux ;
- dans le groupe constitué par l'épichlorohydrine, les polyéthyleneglycol diglycidyl ethers, les molécules de formule Cl-CH₂CH(OH)-N(CH₃)-(CHOH)₅-CH₂OH, Cl-CH₂CH(OH)-NH-C-(CHOH)₃ et les mélanges d'au moins deux d'entre eux.

17. Procédé selon la revendication 10, **caractérisée en ce que** l'agent complexant porte une fonction chimique pouvant réagir sur des fonctions hydroxy et/ou méthoxy des polysaccharides.

18. Procédé selon la revendication 17, **caractérisé en ce que** ladite fonction chimique est un halogène ou un époxyde.

19. Procédé selon la revendication 10, **caractérisé en ce que** la solution d'agent complexant contient l'agent complexant sous forme d'un monomère soluble dans l'eau contenant ledit agent complexant.

20. Procédé selon la revendication 19, **caractérisé en ce que** le monomère est le composé (N-glucidol-N-methyl)-2-hydroxypropyl methacrylate (GMHP) obtenu par réaction de methacrylate de glycidyle et de l'agent complexant N-méthyl D-glucamine (NMG).

21. Procédé selon la revendication 10, **caractérisé en ce que** la matrice est choisie dans le groupe des polyacrylates solubles au moins partiellement dans l'eau et qui contiennent l'agent chélatant sous forme de (N-glucidol-N-methyl)-2-hydroxypropyl méthacrylate (GMHP).

22. Procédé de traitement selon la revendication 10, dans lequel l'agent actif et l'agent complexant sont dans une solution unique, qui contient :
- de 0,2 à 2,5 % de H₃BO₃;
- de 10 à 40 % de GMHP en solution; et
- de 0,1 à 2,5 % d'un thermoinitiateur.

## Patentansprüche

1. Festes Material auf Basis von Polysacchariden, umfassend
- mindestens einen Wirkstoff, der aus Bakteriziden, Fungiziden, Insektiziden und Flammschutzmitteln ausgewählt ist, wobei der Wirkstoff zu mehr als 50 Gew.-% aus mindestens einer Verbindung aus der Gruppe bestehend aus Bor, Borderivaten, Siliciumdioxid, Siliciumdioxidderivaten, Aluminium, Aluminiumderivaten, Aluminosilikatderivaten, Phosphor, Phosphorderivaten, Iod, Iodderivaten und Mischungen davon besteht,
- mindestens einen Komplexbildner, der den Wirkstoff mindestens teilweise komplexiert, und
- eine Polymermatrix, die gegebenenfalls Bindungen mit den Funktionen der Polysaccharide bildet,
wobei das Material **dadurch gekennzeichnet ist, dass** der Komplexbildner chemisch an die Funktionen der Polymermatrix gebunden ist.

2. Material nach Anspruch 1, **dadurch gekennzeichnet, dass** der Komplexbildner mindestens teilweise an den Wirkstoff gebunden ist oder chemisch an die Funktionen der Polysaccharide gebunden ist.

3. Material nach Anspruch 1, **dadurch gekennzeichnet, dass** der Wirkstoff außerdem weniger als 40 % einer Verbindung aus der Gruppe bestehend aus saurem Kupferchromat, ammoniakalischem Kupferarsenat, ammoniakalischem Kupferzinkarsenat, chromatierten Kupferarsenatverbindungen (CCA Typ A, B und/oder C), chromatiertem Zinkchlorid, Alkylammoniumverbindungen, die hauptsächlich Dodecyldimethylammoniumchlorid enthalten, quaternärem ammoniakalischem Kupfer (ACQ Typ A, B, C und/oder D), Kupferbis(dimethyldithiocarbamat), ammoniakalischem Kupfercitrat, Kupferazol (CA) Typ A (CBA-A), Kupferazol Typ B (CA-B), Kupfer-HDO Typ A (CX-A) wobei HDO Bis(N-cyclohexyldiazeniumdioxy) ist, und Mischungen davon umfasst.

4. Material nach Anspruch 1, **dadurch gekennzeichnet, dass** die Gesamtmenge von Wirkstoff und Komplexbildner und Polymermatrix 1 bis 30 Gew.-% des Materials auf Basis von Polysacchariden ausmacht.

5. Material nach Anspruch 1, **dadurch gekennzeichnet, dass** die Polymermatrix aus der Gruppe bestehend aus Epoxidharzen, Polyethern, Polyvinylalkoholen, Polyurethanen, Polyamiden und Mischungen von mindestens zwei davon ausgewählt ist.

6. Material nach Anspruch 5, **dadurch gekennzeichnet, dass** es sich bei der Polymermatrix um ein durch in-situ-Vernetzung eines Polyethylenglykoldiglycidylethers in Gegenwart von Amin- und/oder Hydroxyfunktionen und in Gegenwart mindestens eines Chelatbildners, der ein primäres oder sekundäres Amin enthält, erhaltenes Epoxidharz handelt, wobei die Polymermatrix, auf die der Komplexbildner aufgepfropft ist, eine Größe aufweist, die kleiner ist als die Größe der in dem Material auf Basis von Polysacchariden vorliegenden Hohlräume.

7. Material nach Anspruch 5, **dadurch gekennzeichnet, dass** es sich bei der Polymermatrix um ein (N-Glucidol-N-methyl)-2-hydroxypropylmethacrylat-Polymer handelt.

8. Material nach Anspruch 1, **dadurch gekennzeichnet, dass** es mindestens 50 Gew.-% Polysaccharide umfasst.

9. Material nach Anspruch 1, **dadurch gekennzeichnet, dass** die Polysaccharide aus der Gruppe bestehend aus Hemicellulosen, Cellulosen, chemisch und/oder physikalisch modifizierten Cellulosen, natürlichen Stärken, chemisch und/oder physikalisch modifizierten Stärken und Mischungen von mindestens zwei davon ausgewählt sind.

10. Verfahren zum Imprägnieren eines Materials auf Basis von Polysacchariden, das einen Feststoffgehalt von mehr als 20 % aufweist und Hohlräume umfasst, das mindestens die folgenden Schritte umfasst:
- Verringern des relativen Feuchtigkeitsgehalts des Materials auf Basis von Polysacchariden auf einen Wert zwischen 15 und 35 %;
- Einbringen einer Polymermatrix, in die ein Bor und/oder Siliciumdioxid und/oder Aluminium und/oder Phosphor komplexierendes Molekül eingearbeitet ist, in die Zellen des Materials auf Basis von Polysacchariden:
- Imprägnieren des im vorhergehenden Schritt erhaltenen modifizierten Materials auf Basis von Polysacchariden mit einer Lösung auf Basis von Bor und/oder Siliciumdioxid und/oder Aluminium und/oder Phosphor.

11. Verfahren zur Behandlung eines Materials auf Basis von Polysacchariden, das folgende Schritte umfasst:
a) Imprägnieren des Materials mit einer durch
- Lösen einer Menge von Tris(hydroxymethyl)-methylamin (THAM) und/oder NMG zwischen 0,05 M und 5 M in einer wässrigen Lösung;
- Zugeben eines Überschusses von Epichlorhydrin zu der im vorhergehenden Schritt hergestellten Lösung;
- Rühren der im vorhergehenden Schritt erhaltenen Lösung; und
- Extrahieren des Überschusses von Epichlorhydrin mit einem organischen Lösungsmittel bei einem pH-Wert zwischen 8 und 13 erhaltenen Imprägnierungslösung;
b) Erhitzen des imprägniertem Materials auf eine Temperatur zwischen 40 und 105 °C über einen Zeitraum zwischen 15 Minuten und 24 Stunden und
c) Imprägnieren des im vorhergehenden Schritt erhaltenen erhitzten Materials mit einer Lösung einer Verbindung aus der Gruppe bestehend aus Borsäure, Natriumoctaborattetrahydrat (ODT), phosphoriger Säure, Ammoniumphosphat, Natriumphosphat und Mischungen von mindestens 2 davon, wobei die Lösung eine Konzentration aufweist, die den Erhalt eines Molverhältnisses von Komplexbildner und Bormolekül im Bereich zwischen 0,1 und 2,0 ermöglicht.

12. Verfahren nach Anspruch 11, bei dem die Schritte a) und c) gleichzeitig durchgeführt werden und Schritt b) darauf folgt.

13. Verfahren zum Imprägnieren eines Materials auf Basis von Polysacchariden, das folgende Schritte umfasst:
a') Herstellen einer Imprägnierungslösung, die die Verbindung der Formel ClCH₂CH(OH)CH₂NHC(CHOH)₃ enthält, durch Lösen von 0,05 bis 0,50 mol THAM in 50 bis 500 ml Wasser; Zugeben von 0,06 bis 0,60 mol Epichlorhydrin und Rühren der erhaltenen Lösung;
b') Imprägnieren des Materials auf Basis von Polysacchariden mit der erhaltenen Imprägnierungslösung bei einem pH-Wert zwischen 7 und 13;
c') Erhitzen zwischen 50 und 70 °C über einen Zeitraum von 0,5 bis 24 Stunden; und
d') Imprägnieren des so modifizierten Materials auf Basis von Polysacchariden mit einer wässrigen Lösung von Borsäure mit einer Konzentration von ungefähr 0,33 M (2 Massen-%), deren pH-Wert durch Zugabe von 4,58 ml NaOH (50%ig) von 4,68 auf 10 angehoben wurde.

14. Verfahren nach Anspruch 13, bei dem die Schritte b') und d') gleichzeitig durchgeführt werden und Schritt c') darauf folgt.

15. Verfahren nach Anspruch 10, **dadurch gekennzeichnet, dass** das komplexierende Molekül Hydroxy-, Amin- und/oder Carbonsäurefunktionen trägt.

16. Verfahren nach Anspruch 10, **dadurch gekennzeichnet, dass** der Wirkstoff Bor oder ein Borderivat umfasst und der Komplexbildner für Bor
- aus der Gruppe bestehend aus N-Methyl-D-glucamin (NMG), Tris(hydroxymethyl)aminomethan (THAM), 1,3-Bis[tris(hydroxymethyl)methyl-amino]propan, (Hydroxyethyl)amin, Di(hydroxyethyl)amin, Iminodicarbonsäuren, Iminodiessigsäure und Mischungen von mindestens zwei davon;
- aus der Gruppe bestehend aus Epichlorhydrin, Polyethylenglykoldiglycidylethern, Molekülen der Formel Cl-CH₂CH(OH)-N(CH₃)-(CHOH)₅-CH₂OH, Cl-CH₂CH(OH)-NH-C-(CHOH)₃ und Mischungen von mindestens zwei davon
ausgewählt ist.

17. Verfahren nach Anspruch 10, **dadurch gekennzeichnet, dass** der Komplexbildner eine chemische Funktion trägt, die mit den Hydroxy- und/oder Methoxyfunktionen der Polysaccharide reagieren kann.

18. Verfahren nach Anspruch 17, **dadurch gekennzeichnet, dass** es sich bei der chemischen Funktion um ein Halogen oder ein Epoxid handelt.

19. Verfahren nach Anspruch 10, **dadurch gekennzeichnet, dass** die Lösung des Komplexbildners den Komplexbildner in Form eines wasserlöslichen Monomers, das den Komplexbildner enthält, enthält.

20. Verfahren nach Anspruch 19, **dadurch gekennzeichnet, dass** es sich bei dem Monomer um die durch Umsetzung von Glycidylmethacrylat und dem Komplexbildner N-Methyl-D-glucamin (NMG) erhaltene Verbindung (N-Glucidol-N-methyl)-2-hydroxypropylmethacrylat (GMHP) handelt.

21. Verfahren nach Anspruch 10, **dadurch gekennzeichnet, dass** die Matrix aus der Gruppe der Polyacrylate, die zumindest teilweise wasserlöslich sind und den Chelatbildner in Form von (N-Glucidol-N-methyl)-2-hydroxypropylmethacrylat (GMHP) enthalten, ausgewählt ist.

22. Behandlungsverfahren nach Anspruch 10, wobei der Wirkstoff und der Komplexbildner in einer einzigen Lösung vorliegen, die
- 0,2 bis 2,5 % H₃BO₃;
- 10 bis 40 % GMHP in Lösung und
- 0,1 bis 2,5 % eines Thermoinitiators
enthält.

## Claims

1. Polysaccharide-based solid material comprising
- at least one active agent selected among the bactericidal agents, the fungal agents, the insecticidal agents and the flame-retardant agents, said active agent consisting of more than 50% in weight of at least one compound selected from the group consisting of boron, boron derivatives, silica, silica derivatives, aluminum, aluminum derivatives, aluminosilicate derivatives, phosphorus, phosphorus derivatives, iodine, iodine derivatives and mixtures thereof,
- at least one complexing agent at least partly complexing the active agent, and
- a polymeric matrix eventually forming bonds with functions of the polysaccharides;
said material being **characterized in that** the complexing agent is chemically bonded to functions of the polymeric matrix.

2. Material according to claim 1, **characterized in that** the complexing agent is at least partly bonded to the active agent, or chemically bonded to functions of the polysaccharides.

3. Material according to claim 1, **characterized in that** the active agent further comprises less than 40% of a compound selected from the group consisting of acid copper chromate, ammoniacal copper arsenate, copper arsenate, ammoniacal zinc, chromated copper arsenate compounds (CCA type A, B and/or C), chromated zinc chloride, alkyl ammonium-based compounds containing mainly didecyldimethyl ammonium chloride, quaternary ammoniacal copper (ACQ type A, B, C and/or D), copper bis(dimethyldithiocarbamate), ammoniacal copper citrate, copper azole (CA) type A (CBA-A), copper azole type B (CA-B), copper HDO type A (CX-A) where the HDO is bis(N-cyclohexyldiazeniumdioxy), and mixtures thereof.

4. Material according to claim 1, **characterized in that** the total amount of active compound and of complexing agent and of polymeric matrix represents from 1 to 30% in weight of said polysaccharide-based material.

5. Material according to claim 1, **characterized in that** the polymeric matrix is selected from the group consisting of epoxy resins, polyethers, polyvinyl alcohols, polyurethanes, nylons, and mixtures of at least two thereof.

6. Material according to claim 5, **characterized in that** the polymeric matrix is an epoxy resin obtained by *in-situ* crosslinking of a polyethylene glycol diglycidyl ether in the presence of amine and/or hydroxyl functions and in the presence of at least one chelating agent containing a primary or secondary amine, the polymeric matrix to which the complexing agent is grafted having a size less than that of the cavities present in the polysaccharide-based material.

7. Material according to claim 5, **characterized in that** the polymeric matrix is a polymer of (N-glucidol-N-methyl)-2-hydroxypropyl methacrylate.

8. Material according to claim 1, **characterized in that** it comprises at least 50% in weight of polysaccharides.

9. Material according to claim 1, **characterized in that** the polysaccharides are selected from the group consisting of hemicelluloses, celluloses, chemically and/or physically modified celluloses, natural starches, chemically and/or physically modified starches, and mixtures of at least two thereof.

10. Process for impregnating a polysaccharide-based material, having a dry matter content greater than 20% and which comprises cavities, comprising at least the following steps:
- reducing the relative moisture content of the polysaccharide-based material to a value comprised between 15 and 35%;
- inserting, into the cells of the polysaccharide-based material, a polymeric matrix into which is incorporated a complexing molecule for boron and/or for silica and/or for aluminum and/or for phosphorus; and
- impregnating the modified polysaccharide-based material obtained in the previous step using a solution based on boron and/or on silica and/or on aluminum and/or on phosphorus.

11. Process for treating a polysaccharide-based material comprising the steps of:
a) impregnating said material using an impregnating solution obtained by:
- dissolution, in an aqueous solution, of an amount of tris(hydroxymethyl)methylamine (THAM) and/or of N-methyl-D-glucamine (NMG) comprised between 0.05 M and 5 M;
- addition of an excess of epichlorohydrin into the solution prepared in the previous step;
- stirring of the solution obtained in the previous step; and
- extraction of the excess of epichlorohydrin using an organic solvent, at a pH comprised between 8 and 13;
b) heating the impregnated material at a temperature comprised between 40 and 105°C, for a time period comprised between 15 minutes and 24 hours; and
c) impregnating the heated material obtained in the previous step using a solution of a compound selected from the group consisting of boric acid, of sodium octaborate tetrahydrate (DOT), of phosphorous acid, of ammonium phosphate, of sodium phosphate and mixtures of at least two thereof, said solution having a concentration which makes it possible to obtain a molar ratio of the complexing agent to the boron molecule ranging between 0.1 and 2.0.

12. Process according to claim 11, wherein steps a) and c) are carried out simultaneously and are followed by step b).

13. Process for impregnating a polysaccharide-based material comprising the steps of:
a') preparing an impregnating solution that contains the compound of formula ClCH₂CH(OH)CH₂NHC(CHOH)₃, by dissolution of 0.05 to 0.50 mol of THAM in 50 to 500 ml of water; addition of 0.06 to 0.60 mol of epichlorohydrin; and stirring of the solution thus obtained;
b') impregnating the polysaccharide-based material with the obtained impregnating solution at a pH comprised between 7 and 13;
c') heating at between 50 and 70°C for a time period of 0.5 to 24 hours; and
d') impregnating the polysaccharide-based material thus modified with an aqueous solution of boric acid of about 0.33 M (2% by mass), the pH of which has gone from 4.68 to 10 through the addition of 4.58 ml of NaOH (50%).

14. Process according to claim 13, wherein steps b') and d') are carried out simultaneously and are followed by step c').

15. Process according to claim 10, **characterized in that** the complexing molecule comprises hydroxyl, amine and/or carboxylic acid functions.

16. Process according to claim 10, **characterized in that** the active agent comprises boron or a boron derivative, and the complexing agent for boron is selected:
- from the group consisting of N-methyl-D-glucamine (NMG), tris(hydroxymethyl)aminomethane (THAM), 1,3-bis[tris(hydroxymethyl)methylamino]propane, (hydroxyethyl)amine, di(hydroxyethyl)amine, iminodi-carboxylic acids, iminodiacetic acid and mixtures of at least two thereof;
- from the group consisting of epichlorohydrin, polyethylene glycol diglycidyl ethers, the molecules of formula Cl-CH₂CH(OH)-N(CH₃)-(CHOH)₅-CH₂OH, Cl-CH₂CH(OH)-NH-C-(CHOH)₃, and mixtures of at least two thereof.

17. Process according to claim 10, **characterized in that** the complexing agent comprises a chemical function that can react on hydroxyl and/or methoxy functions of the polysaccharides.

18. Process according to claim 17, **characterized in that** said chemical function is a halogen or an epoxy.

19. Process according to claim 10, **characterized in that** the solution of complexing agent contains the complexing agent in the form of a water-soluble monomer containing said complexing agent.

20. Process according to claim 19, **characterized in that** the monomer is the compound (N-glucidol-N-methyl)-2-hydroxypropyl methacrylate (GMHP) obtained by reaction of a glycidyl methacrylate and of the complexing agent N-methyl-D-glucamine (NMG).

21. Process according to claim 10, **characterized in that** the matrix is selected from the group of polyacrylates at least partly water-soluble and which contain the chelating agent in the form of (N-glucidol-N-methyl)-2-hydroxypropyl methacrylate (GMHP).

22. Process according to claim 10, wherein the active agent and the complexing agent are in a same solution, which contains:
- from 0.2 to 2.5% of H₃BO₃;
- from 10 to 40% of GMHP in solution; and
- from 0.1 to 2.5% of a thermoinitiator.
